# EUROPEAN PATENT SPECIFICATION

(11) **EP 4 222 456 B1**
(45) Date of publication and mention of the grant of the patent: **18.09.2024**
(21) Application number: 21782826.8
(22) Date of filing: 30.09.2021
(51) Int. Cl.: G01D 5/20, G01D 5/245

(54) **ABSOLUTE POSITION ENCODER FOR MEASURING INSTRUMENT**
ABSOLUTPOSITIONSGEBER FÜR MESSINSTRUMENT
CODEUR DE POSITION ABSOLUE POUR INSTRUMENT DE MESURE

(30) Priority: 02.10.2020 CH 12582020
(43) Date of publication of application: 09.08.2023
(73) Proprietor: Hexagon Manufacturing Intelligence Sàrl, 1020 Renens (CH)
(72) Inventor: PIRKL, Werner, 1375 Penthéréaz (CH); FOLETTI, Vasco, 1004 Lausanne (CH); MANETTI, Davide, 1009 Pully (CH); CHARDONNENS, Julien, 1630 Bulle (CH); CHONGKAM, Sokha, 74100 Juvigny (FR); ETTELT, Dirk, 1324 Premier (CH)
(74) Representative: P&TS SA (AG, Ltd.)
(86) International application number: PCT/IB2021/058999
(87) International publication number: WO 2022/070132

(56) References cited:
- EP-A1- 1 102 040
- EP-A1- 2 187 179
- EP-A2- 1 400 778
- CN-Y- 201 225 865
- DE-A1- 3 909 767
- US-A- 3 820 110
- US-A- 5 939 879
- US-A- 6 157 188
- US-A1- 2002 144 423

## Description

### Field of the invention

The present invention concerns an absolute position encoder for digital measuring instruments and accessories thereof, in particular for: hand-held measuring instruments such as digital sliding calliper, digital micrometres and comparators; for transportable measuring instruments such as height gauge, measuring probes systems, and geodetic systems; and for stationary measuring instruments and accessories thereof, such as coordinate measuring machines, rotary tables, rotary axes, articulated probe heads and measuring probes. The measuring instrument can be connected or part of a measuring apparatus, an inspection system, or a machine tool.

### Description of related prior art

Encoders providing a relative position between two elements are key elements of digital measuring instruments.

Encoders relying on a digital scale with periodic marks separated by a constant pitch for providing a relative position between the reader and the scale, are well known and disclosed, for example, in EP2378252 and EP0872712. These encoders comprise readers with sensing elements spaced from each other by a fraction of the marking pitch along the measuring path so as to provide sub-pitch measuring accuracies.

However, main drawback of these encoders stems from the fact that the maximal unambiguous displacement range, i.e. the segment in which an unambiguous unique position can be provided, is limited to the pitch between two adjacent marks. This limitation is typically overcome by combining additional tracks with different pitches and/or by considering the number of (entire) pitch the reader has already overtaken, when moved along the scale from an origin of the scale (e.g. a zero position). The settings of the zero position and of the pitch counter (e.g. at the powering of the encoder) generally requires a displacement of the reader at the origin of the scale.

Absolute position encoders configured to provide an unambiguous position all along the displacement range of the reader, are also well known. For example, US3820110 describes an absolute position encoder relying on a scale with track with markings arranged on adjacent tracks from which a unique digital code can be read, the unique digital code indicating a discrete, absolute position of the reader with respect to the scale. However, the accuracy of this encoder is strictly correlated with dimensions of the markings on the scale as well as on marking alignments on the scale.

Complementary to these approaches, CN201225865Y, US5'886'519, US5'939'879 and EP1 102040 describe embodiments of absolute position transducers relying on combining a coarse absolute position and a fine relative position. The transducers are configured to sense a unique code for providing the coarse absolute position of the reader, while the relative fine position is provided by sensing one or more periodic tracks on the scale. In one embodiment of EP1 102040, the absolute position transducer relies on reading the absolute code by couples of sensors sensing a first and a second tracks of markings. These tracks contain the same unique digital code. The marking of the second track provides an inverted digit of the digit provided by the first track for increasing the reading robustness.
Another example of encoder is disclosed in EP2187179, which describes an encoder configuration comprising an illumination portion, absolute scale pattern comprising absolute tracks, and a detector having a width dimension. An absolute track pattern comprises geometrically congruent sub tracks. The congruent sub tracks are arranged such that if one is translated by the width dimension, then they will nominally coincide. A further example of an absolute encoder is disclosed in DE3909767A1.

### Short disclosure of the invention

An aim of the present invention is to provide an absolute position encoder for applications requiring high accuracy, such as dimensional metrology measurements.

Another aim is to provide an absolute position encoder more sensitive to inaccurate marks sensing due to an unfavourable positioning of the reader relative to the scale.

According to the invention, these aims are achieved by an absolute position encoder for a measuring instrument or accessory for measuring instrument, comprising a digital scale and a reader movable relative to the digital scale. The digital scale is arranged along a travel direction of the reader. The digital scale comprises at least one absolute position track having a sequence of discrete regions (in this document also referred as marks or markings) sharply separated from each other by separating regions, the discrete regions being detectable by detectors. The reader comprises a first and a second series of detectors configured sense the discrete regions to detect at least one of a first and a second absolute position code, each absolute code representing an absolute position (i.e. unique, non-repetitive all along the digital scale) of the reader with respect to the digital scale. The sequence of discrete regions and the first and second series of detectors are disposed in such a way that none of the detectors of at least one of said first and second series of detectors is aligned with a transition between a discrete region and a separating region at each possible position of the reader relative to the digital scale. The position encoder is configured to select the first or second absolute position code which is read by the series of detectors among which no detector is aligned with said transition. According to the invention, a code can be any information represented in an (electrical) analogue or digital format, e.g. in form of one or more analogue or digital signals, or of a digital flag or value.

In an embodiment, the selection of the first or second absolute code includes testing whether said first and second absolute position codes read by respective first and second series of detectors are coherent with a common assumed position of the reader.

In an embodiment, the digital scale further comprises an additional track adjacent and extending along said at least one absolute position track, the additional track being detectable by the reader. In particular, the additional track is provided with markings being detectable by detectors of the reader. The absolute position encoder is configured to select the absolute position code based on a code derived from the additional track. In such embodiment, the derived code could advantageously represent a spatial or physical information or a relationship between the additional track and said at least one absolute position track.

In an embodiment, the additional track is a periodic coded track (in this document also referred as incremental track) providing an incremental position code, the incremental position code representing a periodic (or cyclic) position of the reader with respect to the digital scale. The absolute position encoder is configured
to select said first or second absolute position code based on said incremental position code (e.g. on a periodic position related to said incremental position code), in particular based on an interpolated phase of the incremental position code, and
to provide a precise absolute position code comprising a most significant part derived from the selected first or second absolute position code and a least significant part derived from said incremental position code (e.g. from the periodic position related to said incremental position code), in particular derived from the interpolated phase. Advantageously, the periodic coded track is provided with markings being regularly spaced (e.g. by a constant pitch) along the digital scale, the marking being detectable by detectors of the reader.

In an embodiment, the first and second series of detectors are disposed at equal intervals along the travel direction of the reader.

In an embodiment, the digital scale of the absolute position encoder comprises a first absolute position track having a first sequence of discrete regions and separating regions therebetween, and a second absolute position track having a second sequence of discrete regions and separating regions therebetween. The second sequence is a replica of the first sequence shifted along the travel direction of the reader such that the discrete regions of the first absolute position track are offset with respect to the corresponding discrete regions of the second absolute position track by a constant pitch. Each detector of the first series of detectors is transversally aligned, with respect to the travel direction of the reader, with a corresponding detector of the second series of detectors. The first series of detectors is arranged to move along the first absolute position track while the second series of detectors is arranged to move along the second absolute position track.

In an embodiment, the digital scale of the absolute position encoder comprises a unique absolute position track comprising discrete regions and separating regions therebetween. The first and second series of detectors are disposed along respectively a first and a second row extending along the direction of travel of the reader to detect at least one of said first and second absolute position codes.

In an embodiment, each detector of the first series of detectors is offset with respect to a corresponding detector of the second series of detectors by a constant pitch along the direction of travel of the reader.

In an embodiment, the detectors of the first series of detectors are interleaved with the detectors of the second series of detectors to form pair of adjacent detectors of respective first and second series of detectors.

In an embodiment, the absolute position encoder is configured as a linear position encoder or as an angle position encoder.

In an embodiment, the discrete regions of the at least one absolute position track differ from the separating regions by one of the following properties: optical opacity, optical reflectivity, electric conductivity, magnetization, and magnetic permeability.

Another aspect of the invention relates to a measuring instrument or accessory for measuring instrument comprising the absolute position encoder. The measuring instrument can be a (digital) hand-held measuring instruments, such as a (digital) sliding calliper, a (digital) micrometre, or a (digital) comparator. The measuring instrument can be a (digital) transportable measuring instrument, such as a height gauge, a measuring probe system, an articulated measuring apparatus, or a geodetic system. The measuring system can be a (digital) stationary measuring instrument such as a coordinate measuring machine or system. The accessory for measuring instrument can be, in particular, a rotary table, a rotary axe, an articulated probe head or a survey pole.

In an embodiment, the measurement instrument is configured as a sliding calliper comprising a first jaw fixed relative to the digital scale of the encoder and a second jaw slidable relative to the first jaw and fixed relative to the reader of the encoder. The absolute position encoder provides a value indicative of a distance between the first and second jaws.

In an embodiment, the measurement instrument is configured as (notably it comprises an accessory configured as) a survey pole comprising the absolute position encoder, a first section fixed relative to the digital scale of the encoder and a second section slidable relative to the first section and fixed relative to the reader of the encoder. The absolute position encoder provides a value indicative of a height of the survey pole.

Another aspect of the invention relates to a method of determining a position of a reader relative to a digital scale along a travel direction. The digital scale comprises at least one absolute position track comprising a pattern made of discrete regions and separating regions therebetween detectable by a plurality of detectors in the reader. The detectors are disposed along a first and second rows aligned with the travel direction of the reader. The method comprises determining a first absolute position code from detectors in a first row and a second absolute position code from detectors in the second row. The discrete regions and the plurality of detectors are disposed in such a way that at least one of the first row and second row has no detector aligned with a transition between a discrete region and a separating region at each possible position of the reader relative to the digital scale. The method further comprises selecting the absolute position code provided by the row with no detector aligned with said transition.

In an embodiment, the selection of the absolute position code includes a test whether the first and second absolute codes are coherent with a common assumed position of the reader.

In an embodiment, the test comprises taking as assumed position a position given by the first absolute position code, using the assumed position to establish which detectors of the second row are not facing a transition of the digital scale, determining the expected values of bits of the second absolute position code given the assumed position, and comparing the expected values with values of corresponding bits of the second absolute position code derivable from the detectors not facing said transition.

In an embodiment, the method comprises determining an incremental position code from a periodic coded track on the digital scale, interpolating a phase value of the incremental position code, using the interpolated phase to select the absolute position code, and providing a precise absolute position code comprising a most significant part derived from the selected absolute position code and a least significant part derived from the interpolated phase.

### Brief description of the drawings

Exemplar embodiments of the invention are disclosed in the description and illustrated by the drawings in which:
- Figure 1 is a schematic view of an absolute position encoder according to an embodiment;
- Figures 2 and 3 are schematic views of respectively the reader and the digital scale of the absolute position encoder of Figure 1;
- Figure 4 schematically shows the sinusoidal signals generation for fine position determination within a scale division of the digital scale of Figure 3;
- Figure 5 schematically shows a selection between a first and a second absolute position code by the absolute position encoder of Figure 1;
- Figures 6a to 6d schematically show a sequence of sensing of a first and a second absolute position track at different positions of the reader along of the digital scale of the absolute position encoder of Figure 1;
- Figure 7 is a schematic view of a digital scale of an absolute position encoder according to another embodiment;
- Figures 8 and 9 are schematic views of respectively a reader and a digital scale of an absolute position encoder according to another embodiment;
- Figures 10 and 11 are schematic views of respectively a reader and a digital scale of an absolute position encoder according to another embodiment;
- Figure 12 is a schematic view of an angular absolute position encoder according to another embodiment;
- Figure 13 is a block diagram of a method for providing a reliable absolute position of the reader relative to the track of the absolute position encoder according to any of the above embodiments;
- Figures 14 is a schematic view of an absolute position encoder according to another embodiment;
- Figures 15 is a schematic view of a digital scale and detectors of a reader of an absolute position encoder according to another embodiment;
- Figures 16 is a schematic view of a digital scale and detectors of a reader of an absolute position encoder according to another embodiment;
- Figure 17 is a block diagram of a method for providing a reliable absolute position of the reader relative to the digital scale of the absolute encoder;
- Figure 18 shows a sliding calliper comprising the absolute position encoder according to the invention, and
- Figures 19 and 20 show other exemplary usage of the absolute position encoder, notably for geodetic measuring or surveying.

### Examples of embodiments of the present invention

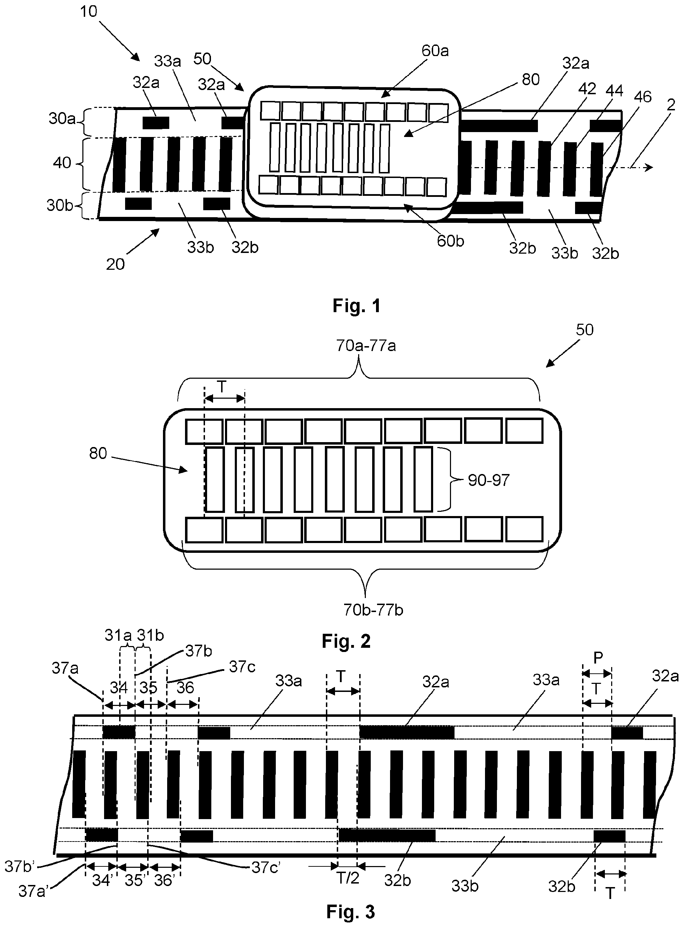

Figures 1 to 3 show an absolute position encoder 10 for a measuring instrument or for an accessory thereof, notably for a dimensional metrological measuring instrument, with a linear accuracy of more than (i.e. inaccuracy less than) 50µm, preferably more than 10 µm. The absolute position encoder 10 comprises a digital scale 20 and a reader 50 movable relative to the digital scale 20 along a measuring path 2. The reader 50 is configured to sense a first and a second absolute position track 30a, 30b for providing an absolute position of the reader 50 with respect to the digital scale 20 along the measuring path 2, by reading a first and a second absolute position code.

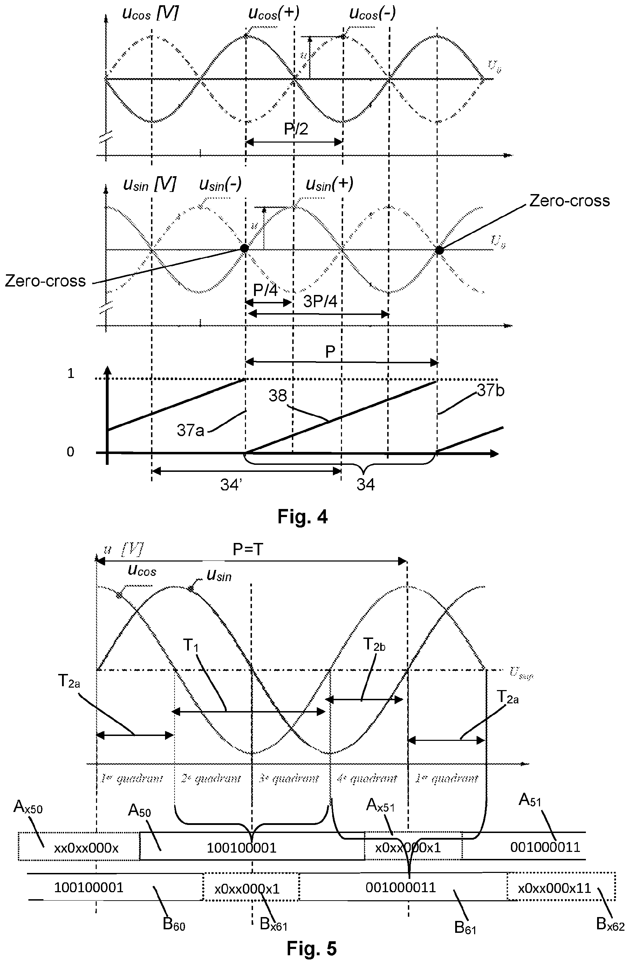

The digital scale 20 further comprises an incremental track 40 for providing a position of the reader 50 within a division of scale divisions 34, 35, 36 along the first absolute position track 30a extending along the measuring path. Typically, each scale division 34, 35, 36 is dimensioned along the measuring path so as to correspond to the maximal displacement range (e.g. Pitch P) in which the incremental track 40 can provide an unambiguous position 38, as illustrated in Figure 5.

The scale divisions 34, 35, 36 can be located along the measuring path, such that one edge 37a of each division corresponds to one edge 37b of an adjacent division as shown in Figure 3. In a non-illustrated variant, each scale divisions can be spaced apart from each other along the measuring path with free space between the adjacent divisions. Preferably, each scale division 34, 35, 36 extends along the measuring path by a same spatial extension T. The spatial extension T can be notably a linear as illustrated in the embodiment of Figures 1 to 6, or a curved or an angular spatial extension according to a variant.

The incremental track 40 comprise a plurality of periodic markings 42, 44, 46 spaced apart from each other along the measuring path for providing such precise position 38 (in this document also referred as periodic position) within each of these scale divisions 34, 35, 36. In particular, the periodic markings 42, 44, 46 can be regularly spaced apart from each other along the measuring path by a pitch P. The pitch P essentially correspond to the spatial extension T of the scale divisions of the first absolute position track 30a, to a multiple of the spatial extension T or to a fraction of the spatial extension T. The pitch P can be notably a linear, round, or angular pitch. The periodic markings may however be spaced part from each other along the measuring path by an unregular pitch, according to a variant. The unregular pitch may depend, for example, on the position of the periodic marks along the measuring path, e.g. an incremental, decremental, logarithmic, exponential, or a polynomial pitch, or a combination thereof.

The scale divisions can also extend along the measuring path by an unregular spatial extension T that can be, for example, function of the pitch and/or of the position of the scale divisions along the measuring path, e.g. an incremental, decremental, logarithmic, exponential, or a polynomial spatial extension, or a combination thereof. The pitch P and the spatial extension T are advantageously shaped according to the (local) shape of the measuring path.

The reader 50 comprises an incremental sensing unit 80 with a plurality of detectors 90-97. Each detector is configured to sense the periodic markings 42, 44, 46 of the incremental track 40, so as to derive an incremental position code. In the illustrated embodiment of Figures 1 to 6, the detector of the incremental sensing unit 80 are phase shifted by a fraction of the pitch P along the measuring path so as to generate sinusoidal signals (u_{cos}, uₛᵢₙ ) with a period corresponding to the pitch P as shown in Figure 4. A relationship between these sinusoidal signals (typically based on an tan⁻¹ or arctan⁻¹) can provide said unique relative position 38 within the pitch P (and then within the corresponding scale division 34, 35, 36), as well known in the field.

Advantageously, the reader 50 and the digital scale 20 can be configured so as the edges 37a, 37b of each scale division 34, 35, 36 are aligned with a zero-cross of one of such phase-shifted sinusoidal signals (cf. Figure 4).

As illustrated, the detectors 90-97 are advantageously grouped in four couples of sensing elements for reducing uncorrelated sensing errors while compensating the common ones. These groups are phased-shifted from each other by P/4. This leads to four sinusoidal signals (u_{cos}⁽⁺⁾, u_{cos}⁽⁻⁾,uₛᵢₙ⁽⁺⁾,uₛᵢₙ⁽⁻⁾) phase-shifted from each other by P/4, P/2 and 3P/4 (typically indicated as 90°-, 180°- and 270°- phase-shifted signal). The relationship between the sensed values of these sinusoidal signals (i.e. the incremental position code) determines the relative position 38 within the pitch P and then within the corresponding scale division 34, 35, 36. The reader can be configured to correct the relative position, e.g. by applying linear and polynomial corrections of the (incremental) tracks.

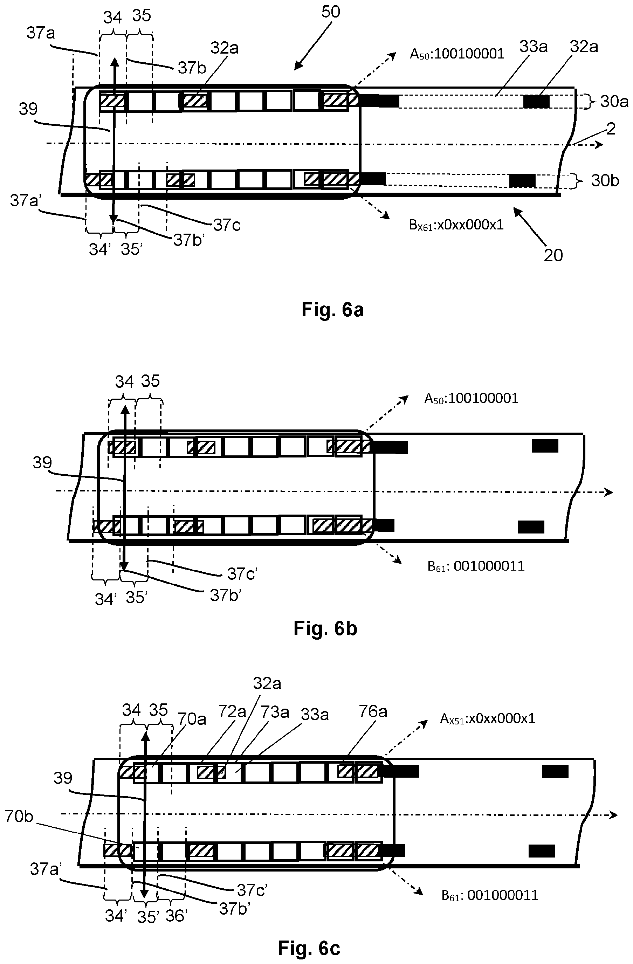

Each of the first and second absolute position tracks 30a, 30b comprises discrete regions 32a, 32b and separating regions 33a, 33b which define regions extending between two discrete regions. These combinations of discrete and separating regions which may vary according to different embodiments described subsequently, are referred hereafter as absolute marking. These regions are associated with the incremental track 40 for providing a coarse absolute position of the current position of the encoder, i.e. to uniquely identify or determine on which of scale divisions 34, 35, 36 of the first absolute position track 30a the reader 50 is (currently) positioned. The first and second absolute position tracks 30a, 30b of the digital scale 20 can be sensed by a first and a second absolute sensing unit 60a, 60b of the reader 50 provided with sensing elements 70a-77a, 70b-77b. The encoder 10 can thus provide the absolute position 39 (Figures 6a-6b) of the reader with respect to the scale as function of the precise relative position 38 (Figure 4) provided by sensing the incremental track 40 and of (an absolute reference associated with) the sensed scale division 34, 35, 36, i.e. the first absolute position. Advantageously, the absolute position 39 can be provided by adding (or subtracting) the precise relative position 38 to (or from) and an absolute reference associated with the sensed scale division 34, 35, 36 of the first absolute position track 30a, i.e. the first absolute position, preferably corresponding to one of opposite edges 37a, 37b of the scale division 34-36.

The identification of each scale division 34-36 efficacy relies on arranging the absolute marking of the first absolute track 30a so as the reader 50 can sense a first plurality of unique identifiers (A₅₀,A₅₁) along the measuring path, each unique identifier being distinct and dependent on the positional relationship between the reader and the digital scale along the measuring path.

The unique identifier can be provided within the first plurality of unique identifiers along the measuring path, i.e. each unique identifier occurs exactly once as a portion of the sequence, the portion of each code partially overlapping the portion of the adjacent code. Alternatively, the first plurality of unique identifiers can be provided within a series of juxtaposed identifiers (i.e. placed side by side without overlap) along the measuring path.

As illustrated, the absolute marking of the first absolute track 30a can be arranged along the measuring path 2. Alternatively or complementary, sets of absolute markings can be grouped (e.g. delimited or aligned) into tracks being oriented perpendicular or inclined with respect to the measuring path 2.

Advantageously, the first plurality of unique identifiers can correspond to a first plurality of digital codes, each digital code being unique and assigned to one of the scale divisions 34-36 of the first absolute position track 30a. A digital code can be any code having a discrete, discontinuous representation, notably being processable by a computer (e.g. by means of a processor or controller) or by an equivalent thereof (e.g. a microprocessor, a FPGA, or an ASIC). Preferably the digital code is a binary code with a plurality of digits, preferably having N digits with N=3,4,5 or greater than 5 so as to provide a unique identification of N² distinct scale divisions of the first absolute position track 30a.

The first plurality of digital codes can rely on a Gray coding for limiting the number of different bits between two adjacent digital codes. This coding is particular advantageously in case of individual codes are sensed along a perpendicular or inclined (virtual) axis with respect to the measuring path (e.g. in case of a juxtaposition of codes oriented perpendicular or inclined with respect to the measuring path).

Alternatively, the first plurality of digital codes can rely on or correspond (entirely or partially) to a DeBruijn sequence in which every possible code occurs exactly once as portion of the sequence. This coding optimally enables a sensing of a (continuous) sequence of codes along the measuring path, the measuring path being notably a linear, a circular or even a circular (ring/disc-shaped) path.

In the illustrated embodiment of Figures 1 to 6, the first plurality of unique identifiers take the form of a continuous sequence of digital codes, each digital code A_{N} being unique and assigned to one of the scale divisions 34-36 of the first absolute position track 30a, as above mentioned.

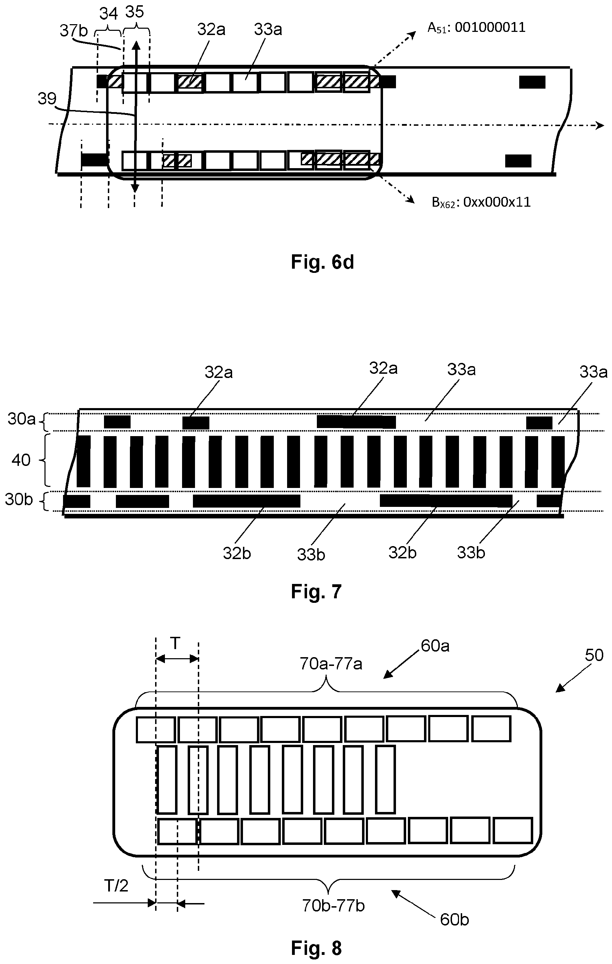

As illustrated in Figures 6ₐ to 6_{d}, the first plurality of digital codes A₅₀,A₅₁ can be binary codes with N digits, N=9 providing a unique identification up to 512 distinct scale divisions. Each digit of each digital code (A₅₀,A₅₁) is advantageously provided by one detector 70a-77a of the first absolute sensing unit 60a of the reader.

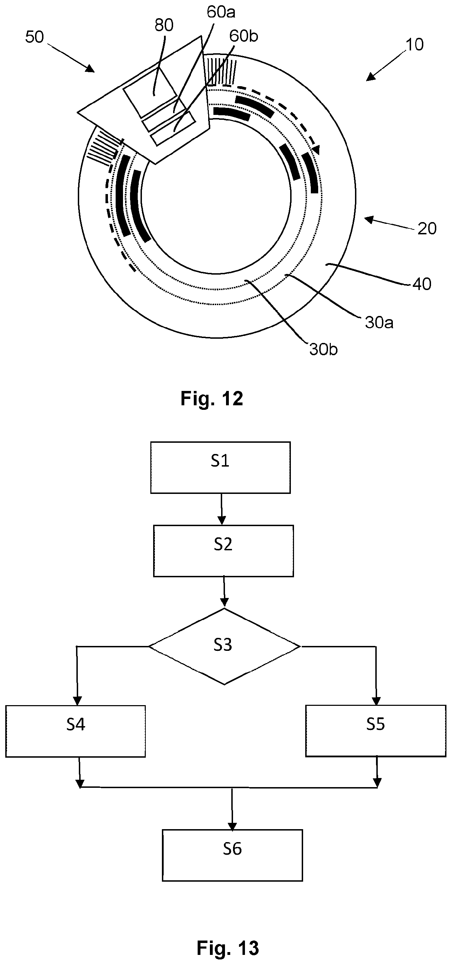

In the illustrated embodiment of Figures 1 to 6, the first plurality of digital codes relies on (a portion of) a DeBruijn sequence so as to enable a continuous sequence of codes along the measuring path. Each digital code is extracted (sensed) from such sequence depending on the relative position of the reader 50 with respect to the digital scale 20 along the measuring path. The first plurality of digital codes can be equally used for linear as well for angular measuring instrument (cf. Figure 12), i.e. along linear measuring path up to a circular (ring/disc-shaped) measuring path of an angular measuring instrument.

Figures 6ₐ to 6_{d} schematically shows sensing of the first absolute position code, in form of a digital code that is part of a first plurality of digital codes, when the reader 50 is relatively moved from a first to a second relative position relative to the digital scale 20. The first position of the reader is within a central portion of (i.e. centred in) a first scale division 34 of the first absolute position track 30a and the second position of the reader is within a central portion of (i.e. centred in) a second scale division 35 of the first absolute position track. In this embodiment, the second scale division 35 is adjacent to the first scale division 34.

Figure 6a schematically shows a sensing of a digital code of the first plurality of digital codes when the reader is relatively centred in the first scale division 34, the position of the reader being schematically indicated by the arrow 39. In this spatial relationship, the detectors 70a-77a of the first absolute sensing unit 60a sense a subset of first absolute marking 32a, 33a being located in the sensing volume of each detector so as to provide (individual) signals being discretized in the code A₅₀ =100100001. This code A₅₀ provides the unique identification of this first scale division 34.

The absolute position 39 of the reader 50 can thus be determined by adding or mathematically combining the precise relative position provided by sensing the incremental track 40 with the absolute reference associated with the first scale division 34 of the first absolute position track 30a. The absolute reference corresponds in this embodiment to the (lower value) edge 37a of said first scale division 34.

Figure 6b schematically shows a sensing of a digital code of the first plurality of digital codes when the reader 50 is slightly displaced with respect to the centre of this first scale division 34. Even if not the entire subset of discrete region 32a of the first absolute marking of the first absolute position track 30a are completely located in the sensing volume of each detector, the provided individual signals still provide a discretisation of the code A₅₀ assigned to the first scale division 34. The absolute position 39 of the reader can still be determined by adding the current precise relative position provided by sensing the incremental track 40 with the absolute reference 37a associated with the first scale division 34 (i.e. the first absolute position).

Figure 6c schematically shows a sensing of a digital code of the first plurality of digital codes when the reader 50 approaches the intermediate position between two adjacent scale divisions 34, 35, i.e. the reader 50 is relatively positioned within a (right) peripheral portion of the (first) scale division. In other words, some of the first series of detectors 70a-77a of the reader 50 are aligned with transitions between separating and discrete regions 32a, 33a. In this peripheral portion, some discrete regions 32a of the absolute marking are (essentially) halfway located in the sensing volume of some detectors (i.e. detector 70a, 76a) of the first absolute sensing unit, as the digital code is changing from a first to a second code. The discretization of the provided signals can lead to an unreliable discriminated digital code Aₓ₅₁ whose transient digits could be undetermined up to erroneously discriminated. Thus, the absolute position 39 of the reader can cannot be determined reliably as the absolute reference associated with the sensed scale division A_{X51} (i.e. the first absolute position) can be instable up to wrong. This position of the reader are parts of said unfavourable positionings.

Figure 6d schematically shows a sensing of a digital code of the first plurality of digital codes when the reader is relatively positioned within the central portion of another scale division 35. None of the detectors 70a-77a is aligned with a transition between separating and discrete regions 32a, 33a. In this spatial relationship, a new subset of absolute marking is fully located in each of the sensing volume of the detectors of the first absolute sensing unit so as to provide a (correct) discretization of each transient digits. This discretization leads to a new code A₅₁ =001000011 undoubtedly identifying the second scale decision 35. The absolute position 39 of the reader can still be determined by adding the current precise relative position with the absolute reference 37b associated with second scale division 35.

In order to provide robustness in intermediate positions between two adjacent scale divisions 34, 35, sensing elements of the reader and the digital scale are further configured to provide, for the same positioning of the reader 39, a second absolute position code, notably representing a second absolute position that is different from the first absolute position, so as to provide a reliable position in this unfavourable positioning of the reader. In this embodiment, the digital scale is further configured to allow the reader to sense a second position code, notably in form of one of a plurality of unique identifiers B₅₀,B₅₁. Each unique identifier is assigned to a peripherical portion T₂ₐ, T_{2b} of each of the scale divisions (Figure 5), notably to the left and right peripherical portion of two adjacent scale divisions. In these intermediate positions of the encoder, the absolute position 39 can be provided by mathematically combining (e.g. adding or subtracting) the precise relative position 38 with an absolute reference associated with the sensed overlapping scale division 34', 35', 36' (i.e. the second absolute position) of the second absolute position track 30b. The second absolute position preferably correspond to one of the (lower or upper value) edges 37a', 37b', 37c' of the sensed overlapping scale division 34'-36', or to a central position of the sensed overlapping scale division.

In particular, each unique identifier of the second plurality of identifiers can be assigned to each of a plurality of overlapping scale divisions 34'-36', the overlapping scale divisions being assigned to the incremental track 40 and/or to the scale divisions 34-36 of the first absolute position track 30b.

The plurality of overlapping scale divisions is thus provided on the second absolute position track 30b of the digital scale along the measuring path, each overlapping scale division 34' spatially overlapping (adjacent) parts 31a, 31b of (both) two adjacent scale divisions 34, 35 (cf. Figs. 1 and 3) of the first absolute position track 30a. Advantageously, each overlapping scale division comprises the (two) adjacent peripherical portions of two adjacent scale divisions, notably the (right-positioned) peripherical portion of a scale division and the (left) peripherical portion of the (right-sided) adjacent scale division. The second absolute position track 30b of the digital scale is configured to enable the reader to sense the unique identifier B₆₀,B₆₁ of the second plurality of identifiers, notably assigned to each of these overlapping scale divisions 34'-36'.

The use of overlapping scale divisions provides thus an absolute position detection in the peripherical portions of the scale divisions 34-36 of the first absolute position track 30a, where a unique identifier of the first plurality of identifiers has to change from a first to a second value, constituting unfavourable positioning of the reader where the first absolute position is likely/probably unreliable.

The overlapping scale divisions are shaped according to the (shape of) the pitch P and/or to the (shape of) of the scale divisions of the first absolute position track and/or to the (local) shape of the measuring path. Each overlapping scale division can notably be linear-, curved- or angularshaped along the measuring path.

Similar to the scale divisions of the first absolute position track, the unique identification of overlapping scale divisions of the second absolute position track are arranged so as the reader can sense a plurality of unique identifiers B₆₀,B₆₁ along the measuring path, each intermediate unique identifier being distinct (i.e. unique) and dependent on the positional relationship between the reader and the scale along the measuring path, according to the scale divisions 34'-36' of the second absolute position track 30b.

This embodiment enables that, thanks to a particular relative disposal between the sequence of discrete regions 32; 32a, 32b and the first and second series of detectors 70a-77a, 70b-77b, none of the detectors of at least one of the first and the second series of detectors is aligned with a transition between a discrete region 32; 32a, 32b and a separating region 33; 33a, 33b at each possible position of the reader 50 relative to the digital scale.

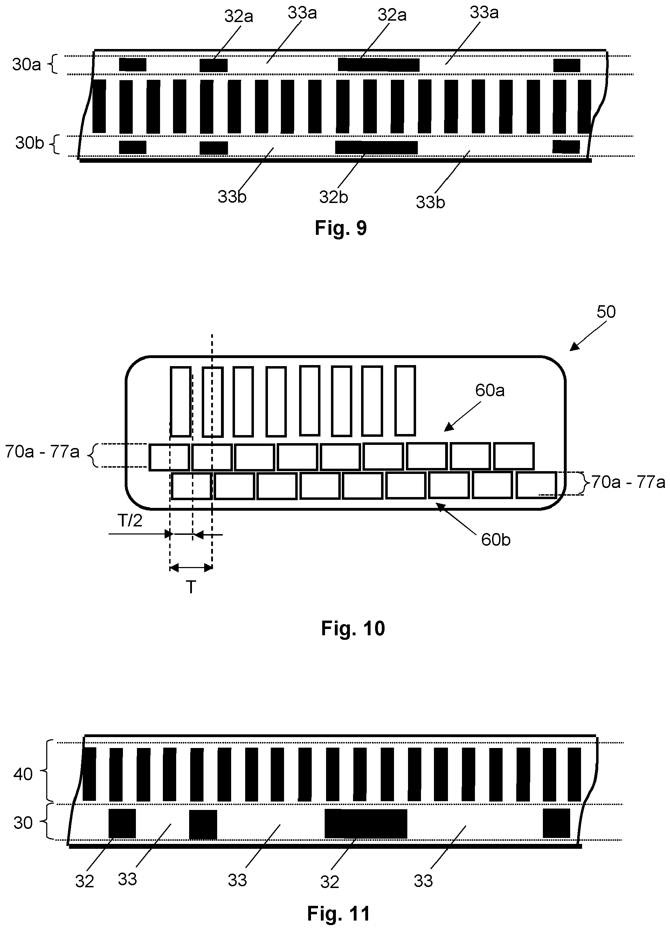

The sensing of a unique identifier of the first and second plurality of identifiers can rely on a unique absolute position track 30 comprising discrete region 32c and separating region 33c therebetween as shown in the embodiment of Figures 10-11, on a first and second absolute marking provided on a first and a second absolute position track 30a, 30b as per the embodiment of Figures 1 to 6 or on a combination thereof (non-illustrated).

The overlapping scale divisions 34'-36' can be spaced apart along the measuring path. Alternatively, the overlapping scale divisions can be located (essentially) one borders another (i.e. without overlapping and without free space between the divisions), along the measuring path, so as an edge of one overlapping scale division essentially corresponds to a edge of the adjacent one.

Advantageously, each overlapping scale division 34'-36' can be (essentially) centred between two adjacent main scale divisions (i.e. in correspondence with an intermediate position and/or a common edge 37a, 37b between two adjacent main scale divisions) along the measuring path so as to provide a more robust absolute position detection in each transition between a discrete region and a separating region.

Alternatively or complementarily, each overlapping scale division 34'-36' extends along the measuring path by the same spatial extension T of the main scale divisions 34-36.

The reader 50 of the encoder 10 can comprise a second absolute sensing unit 60b with a plurality if detectors 70b-77b as shown for example in Figures 1-2 for sensing discrete regions 32b and separating regions 33b therebetween.

The unique identifiers of the second plurality of identifiers can be technically enabled similarly to the unique identifiers of the first plurality of identifiers, as above described.

The unique identifiers of the second plurality of identifiers can be provided along the measuring path, i.e. each unique identifier of said second plurality of identifiers occurring exactly once as a portion of the sequence. Alternatively, the unique identifiers are in the form of a series of juxtaposed identifiers (i.e. placed side by side without overlap) along the measuring path.

The second plurality of unique identifiers can correspond to a second plurality of digital codes, each of those being unique and assigned to one of said overlapping scale divisions. Similarly, a digital code of the second plurality of digital codes can be any code having a discrete, discontinuous representation, notably being processable by a computer (e.g. by means of a processor or controller) or by an equivalent thereof (e.g. a microprocessor, a FPGA, or an ASIC). Preferably the second plurality of digital codes are binary codes with a plurality of digits, preferably having N digits with N=3,4,5 or greater than 5 so as to provide a unique identification of N² distinct overlapping scale divisions. More preferably, the second plurality of digital codes have the same representation as the first plurality of digital codes.

Similarly to the first plurality of digital codes, the second plurality of digital codes can rely on a Gray coding for limiting the number of different bits between two adjacent digital codes or can rely or correspond (entirely or partially) to a DeBrujin sequence.

In the illustrated embodiment of Figures 1 to 6, the second plurality of unique identifiers take the form of a (continuous) sequence of digital codes (B₆₀,B₆₁), each of the second plurality of digital codes B_{N} being unique and assigned to one of said overlapping scale divisions 34-36, as above mentioned. The second of plurality of digital codes are binary code with N digits, N=9 providing a unique identification up to 512 distinct scale divisions. The second plurality of digital codes relies on (a portion of) a DeBruijn sequence so as to enable a continuous sequence of codes along the measuring path, each digital code being extracted (sensed) from such sequence depending on the relative position of the reader with respect to the scale. In the illustrated embodiment of Figures 1-6, the second plurality of digital codes have the same digital representation as the first plurality digital codes and relies on the same code generation, i.e. the codes (and the absolute markings thereof) are correlated as shown in particular in Figure 3.

Alternatively, identification of overlapping scale regions can rely on the second plurality of unique identifiers having other digital representations, being or not correlated with the digital representation of the first plurality of unique identifiers. In an embodiment shown in Figure 7, the digital scale 20 comprises a second absolute position track 30b provided with discrete and separating regions 32b, 33c arranged to correspond to binary inverse codes of the first plurality of digital codes.

In Figures 1 to 6, the overlapping scale divisions 34'-36' of the second absolute position track 30b are spatially shifted by a spatial period T/2 (corresponding to half of the spatial extension T of the first scale division) along the measuring path with respect to the scale divisions 34-36 of the first absolute position track 30a. In other words, each scale division of the second absolute position track 30b is essentially centred with respect to two adjacent scale divisions of the first absolute position track 30a along the measuring path. The marking of the second absolute position track 30b is shifted towards the left with respect to the marking of the first absolute position track 30a but may be shifted to the right according to another embodiment.

Alternatively, as illustrated in Figures 8-9, the digital scale 20 may comprise a first and a second absolute position track 30a, 30b. The absolute marking 32a, 33a of the first absolute position track 30a is the same (or inverted according to a variant not shown) as the absolute marking 32b, 33b of the second absolute position. The first and second absolute position tracks 30a, 30b are aligned along the measuring path. In this embodiment, the reader 50 of the Figure 8 comprises a first absolute sensing unit 60a with a first series of detectors 70a-77a, and a second absolute sensing unit 60b with a second series of detectors 70b-70b. Each detector of the first absolute sensing unit 60a is offset from a corresponding detector of the second absolute sensing unit 60b by a spatial period T/2

Alternatively to the embodiment of Figures 8-9, the digital scale 20 can comprises a single absolute position track 30 with the same and aligned absolute markings 32, 33 as illustrated in Figure 11. In order to provide both the first and second unique identifiers, the reader 50 of Figure 10 comprises two adjacent absolute sensing units 60a, 60b extending along the travel direction of the reader. As for the embodiment of Figures 8-9, each detector of the first absolute sensing unit 60a is offset from a corresponding detector of the second absolute sensing unit 60b by a spatial period T/2.

The above-described embodiments enable a robust detection of the absolute position 39 of the reader 50 at each of its possible positions relative to the digital scale 20. These embodiments rely on a digital scale 20 comprising: an incremental track 40 for providing a relative position 38 of the reader 50 within a scale division of a series of scale divisions 34-36 on a first absolute position track 30a. The reader can individually read each of the first and second plurality of unique identifier A₅₀, A₅₁, B₆₀, B₆₁. Each of the first plurality of identifiers A₅₀, A₅₁, is assigned to a (central) portion of a scale division of the first absolute position track 30a, while each of the second plurality of identifiers B₅₀, B₅₁, is assigned to another portion of the scale division, notably the (right or left) peripherical portion of the scale division. Preferably, each of the second plurality of identifiers is assigned to an overlapping scale division (continuously) comprising the adjacent peripherical portions of two adjacent scale divisions of the first absolute position track 30a.

With respect to the embodiment of Figure 1 to 6, Figures 6a-6d schematically show the robust effect of the scale divisions 34'-36' of the second absolute position track 30b on sensing the absolute coarse position of the reader 50.

When the detector 70a of the first absolute sensing unit of the reader 50 is relatively positioned in a transition region between two adjacent scale divisions 34, 35 of the first absolute position track 30a (i.e. in the peripherical portion) the detector 70b of the second absolute sensing unit of the reader 50 is then relatively located (notably centred) within the edges 37b', 37c' of an overlapping scale division 35' (e.g. in the central portion thereof) of the second absolute position track 30b, as illustrated in Figure 6c. In contrast to the unreliable discriminated main digital code Aₓ₅₁, as none of the detectors 70b-77c is aligned with a transition between discrete and separating regions 32a, 33a, the intermediate digital code B₆₁ can be reliably discriminated and allowing an undoubtably identification of the related overlapping scale division 35'.

According to the invention, the central portion of a scale division of the first absolute position track 30a or of a unique absolute position track 30 is a portion of the scale division where the unique identifier is undoubtedly discriminable by the reader, e.g. the absolute marking providing the unique identifier are relatively located (along the travel direction of the reader) in the sensing volume of the detectors of the reader, completely down to 90% (i.e. equal or more than 90%), preferably down to 75% (i.e. equal or more than 75%).

According to the invention, the (left and the right) peripherical portion of a scale division is a portion of the scale division where the first unique identifier is doubtfully discriminable by the reader, e.g. the absolute marking providing a first unique identifier are relatively located (along the travel direction of the reader) in the sensing volume of the detector of the reader less than 60%, preferably less than 75%.

The encoder 10 can thus provide the absolute position 39 of the reader 50 with respect to the scale as function of the precise relative position 38 provided by sensing the incremental track 40 and (an absolute reference associated with) the scale division 34'-36'. The absolute reference associated with the scale division of the second absolute position track 30b can correspond to the (lower or upper value) edges 37a', 37b', 37c' of the sensed scale division 34'-36' of the second absolute position track 30b. Alternatively, depending on the precise relative position 38 provided by sensing the incremental track 40, the absolute reference associated with scale division can selectively correspond to the (lower or upper value) edges 37a, 37b, 37c of one of the overlapped scale divisions 34-36, notably to the overlapped edges.

Similarly to the first plurality of digital codes, the second plurality of digital codes are also affected by edge effects in correspondence to code transitions (e.g. peripherical portions of the overlapping scale divisions). These transitions are however unaligned with the transitions of the first plurality of digital codes, as illustrated in Figures 6a and 6d (e.g. Bₓ₆₁, Bₓ₆₂).

The use of overlapping scale divisions 34'-36' of the second absolute position track 30b, each overlapping a part 31a, 31b of each of (i.e. both) two adjacent scale divisions 34-35 (notably the peripherical portions thereof) of the first absolute position track 30a, provides thus an absolute position detection in critical spatial (i.e. peripherical) regions of the scale divisions, this critical regions corresponding to transition regions of the (sensed) first plurality of unique identifiers.

As the intermediate zones of the overlapping scale divisions are not aligned with the (edges of the) intermediate zones of the scale divisions of the first absolute position track 30a, i.e. the peripherical portions of the scale divisions of the first absolute position track 30a are not aligned (preferably not overlapping) with the peripherical portions of the overlapping scale divisions, the encoder 10 can provide a more robust detection all along the travel direction of the reader by the use of the first and second plurality of unique identifiers obtained from sensing the marking of both the first and second absolute position tracks 30a, 30b by respective first and second absolute sensing unit 60a, 60b of the reader 50.

The reader 50 is configured to select one of the first and second unique identifiers to determine the absolute position 39 of the reader 50, according to (as the function of) the relative position provided by sensing the incremental track 40, as illustrated in Figure 5, so as to use a reliable (first or second) absolute position.

Knowing the relative position of the (transitional) regions of the scale divisions of the first absolute position track 30 with respect to incremental track 40, the encoder 10 rely on the position of the first or the second absolute position (via the first and/or the second unique identifiers), depending on the sensed incremental track, notably by determining relative position within the scale division of the first absolute position track 30a. If the relative position is near or within a portion of a transition that may impact the reliability of the unique identifier obtained by sensing the first absolute position track (i.e. the encoder estimates that some of the detectors 70a-77a are probably aligned with a transition between separating and discrete regions), the reader can decide to rely on the second unique identifier rather than first unique identifier.

In the exemplary illustration of Figure 5, each scale division (of spatial extension T equal to the pitch P) can be split in four distinct quadrants. Each quadrant can be uniquely identified by the relative position of the reader within the scale division of the first absolute position track 30a. Alternatively or complementarily, each quadrant can be uniquely identified by the signs of the (unbiased) four sinusoidal signals of Figure 4 provided by the series of detectors 90-97 of the incremental sensing unit 80 of the reader by sensing the incremental track 40. A first unique identifier can thus be assigned to a subset of these quadrants (e.g. the second and the third quadrant of Figure 5), while a second unique identifier can be assigned to the remaining subset (e.g. the first and the fourth quadrant of Figure 5). In particular, the central portion T₁ of the scale division of the first absolute position track 30a can be defined to correspond to the 2^{nd} and 3^{rd} quadrant, while the (left) peripherical portion T₂ₐ to the 1^{st} quadrant and the (right) peripherical portion T_{2b} to the 4^{th} quadrant.

By sensing the incremental track 40 by the incremental sensing unit 80 (notably via the sensed relative position) and by knowing the spatial relationship between the incremental track and the first and the second absolute position track (notably the spatial relationship between the transitions thereof), the encoder can estimate, for the current position of the reader, if none of the detectors of the first series of detectors 70a-77a is aligned with a transition between a discrete region and a separating region and/or if none of the detectors of the second series of detectors 70b-77b is aligned with a transition between a discrete region and a separating region. Depending on the estimations, the encoder can select the first or the second absolute position code provided by the first and the second absolute position track respectively.

Advantageously, the reader and the marking arrangement can be configured to permit a separate sensing of one or more second unique identifiers from the sensing of one or more first unique identifiers (and vice versa). This allows the reader to select the first unique identifier or the second unique identifier for determining the identifier, notably as function of the determined (or forecasted) relative position provided by sensing the incremental track. Advantageously, the first and the second absolute position can be simultaneously (i.e. at the same time, i.e. within a time span of less than 0.1s, preferably less than 10 ms) provided.

The absolute position encoder 10 of Figure 12 is used for providing an absolute position of the reader 50 relatively to a circular or round track. The track comprises an incremental track 40, a first absolute position track 30a and a second absolute position track 30b. The second absolute position track can be located on a (disc-shaped) scale 20 along a circular (disc- or ringshaped) path for providing an angular absolute position of the reader. The angle can be concaved or convex. The reader comprises a first and a second absolutes sensing unit 60a, 60b to sense respective first and second absolute position tracks 30a, 30b and an incremental sensing unit 80 for sensing the incremental track 40.

The absolute position encoder 10 can thus enable a method for providing an absolute position of the reader 50 relatively to a digital scale 20.

The absolute position encoder 10 can be configured to inductively sense at least a subset of the marking arrangement. The absolute markings and/or the periodic markings can be thus conducting and/or permeable elements, while the reader 50 can comprise inductive or eddy current sensing units 60a, 60b 80 for inductively sense the absolute markings and/or the periodic markings.

Alternatively or complementarily, the reader can be configured to capacitively and/or magnetically and/or optically sense at least a (or another) subset the marking arrangement and/or the periodic markings, said subset of marking arrangement and/or the periodic markings enabling a capacitively and/or resistively and/or magnetically and/or optically sensing.

With reference to figure 13, the method comprises a first step S1 involving a sensing of the incremental track 40 of the digital scale 20 by the reader 50.

The method comprises a second Step S2 involving a determination or a forecasting of a relative position 38 of the reader 50 within one of the scale division 34-36 of at least one absolute position track 30; 30a, 30b, for example within one of the scale division 34-36 of a first absolute position track, by means of the sensed incremental track. In other words, the second Step S2 involves an estimation based on the sensed incremental track 40 (notably on the determined/forecasted relative position) if, for the current position of the reader 50 relative to the digital scale 20, none of the detectors of the first and/or of second series of detectors is aligned with a transition between a discrete region 32; 32a, 32b and a separating region 33; 33a, 33b.

A third step S3 consist in selecting a first digital code A_{N} (S4) or a second digital codes B_{N} (S5) provided by sensing the markings on both first and second absolute position tracks 30a, 30b as function of the determinate or forecasted relative position 38 of the reader 50. In other words, the third Step S3 involves a selection of the first or the second absolute position code based on the estimation that none of the first or second series of detectors is aligned with a transition.

The step of determining the relative position 38 of the reader can comprise a detection of the determinate or forecasted relative position 38 within the central portion and/or within the (left and/or right) peripherical portion of a scale division of the first absolute position track 30a. The selection of first or a second digital code A_{N}, B_{N} can be function of the detected central and/or peripherical portion of the scale division of the first absolute position track 30a.

Step S6 comprises providing the absolute position 39 of a reader as function of the sensed relative position 38 and of the determined digital code A_{N}, B_{N}. The step of providing the absolute position 39 of the reader can also comprise correcting the relative position, e.g. by applying linear and polynomial corrections.

The absolute position encoder 10 and the method can be advantageously implemented and enabled in a measuring instrument and/or an accessory thereof, notably for dimensional metrology (i.e. quantification of one or more physical sizes of or distance from a given object). More particularly, the absolute position encoder 10 and the method can be advantageously implemented and enabled in a measuring instrument and/or an accessory thereof notably providing one or more of the following metrological features: a linear dimension, a thickness, a radius, an inner diameter, or an outer diameter of an object; or a coordinate, roughness, or surface finish of a surface of an object. The measuring instrument can be a hand-held measuring instrument (e.g. digital sliding calliper, digital micrometre) or a transportable measuring instrument (e.g. height gauge, measuring probes). The measuring instrument can also be a stationary measuring instrument, such as a coordinate measuring machine (CMM) or measuring robot provided with a granite (or reference) table on which object have to be placed for measurement (e.g. bridge CMM). The accessory can be a rotary table, a rotary axis or an articulated probe head for orienting a (contactless or contact) probe (notably with respect to a mobile or fixed portion, or component, of the measuring instrument). The measuring instrument can be connected to, or part of, a measuring apparatus, an inspection system or a machine tool.

The encoder 10 can also include more than one reader, i.e. a plurality of readers each individually movably relatively to the (same) scale, notably along the travel direction of the reader, e.g. for providing position of a plurality of mobiles components of the measuring instrument.

The surface of scale on which the encoder(s) is moveable can be not only (substantially) planar but also non-planar, e.g. curved or round.

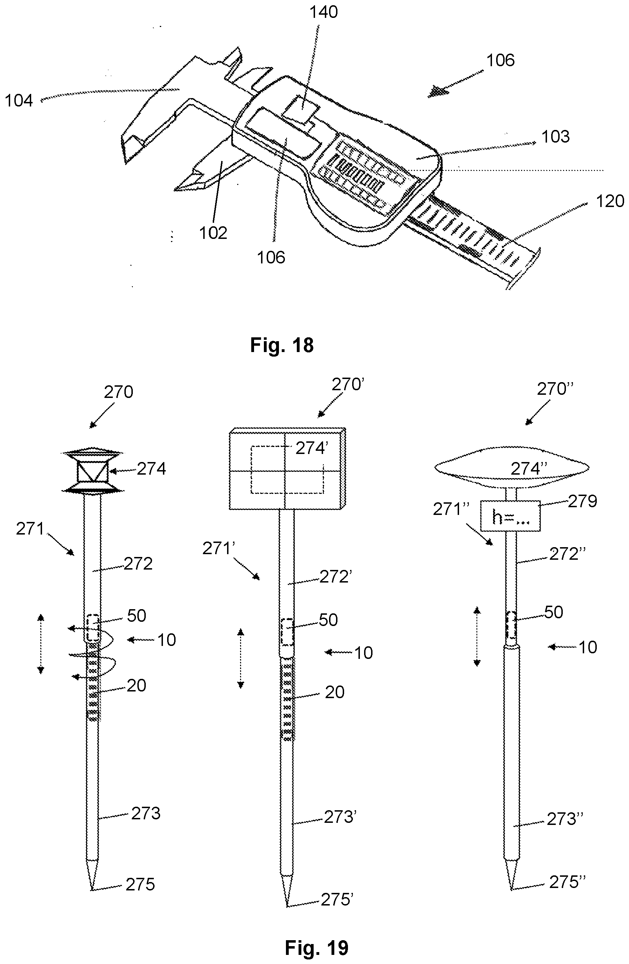

Advantageously, the absolute position encoder can comprise an electronic circuit 140 (cf. Figure 18), the electronic circuit being configured to provide the position 39 of the reader with respect to the scale along the measuring path, notably to provide a digital representation thereof. The electronic circuit 140 can be part of the reader.

The electronic circuit can comprise a programmable electronic circuit (such as a microcomputer, a microcontroller, or a FPGA), or a dedicated electronic circuit (e.g. an ASIC, or discrete-element circuit).

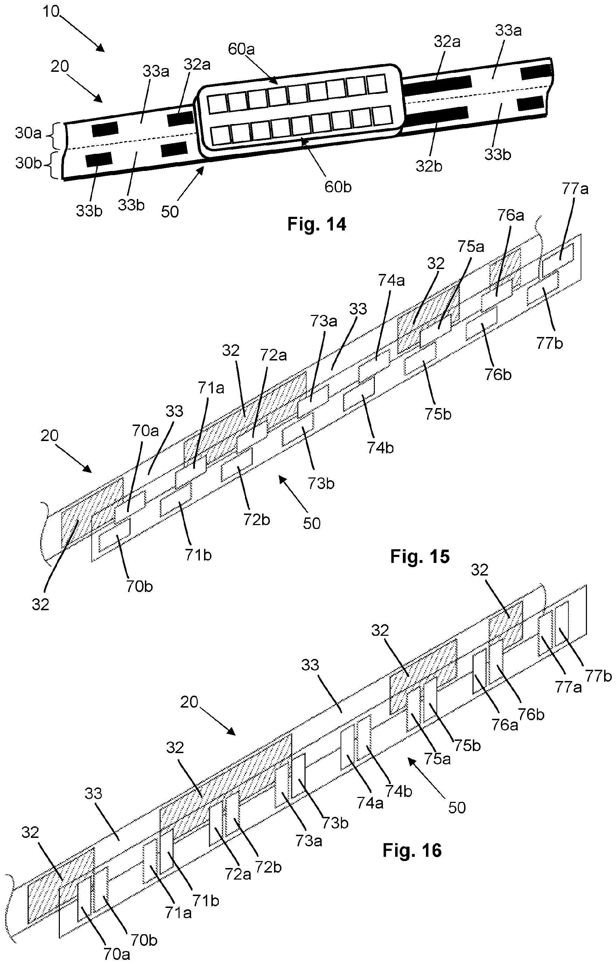

Figure 14 shows another embodiment of the absolute position encoder 10 for less accurate applications. The absolute position encoder 10 comprises a reader 50 with a first and a second sensing unit 60a, 60b configured to sense respective discrete regions 32a, 32b and separating regions 33a, 33b of respective first and second absolute position tracks 30a 30b of a digital scale 20. The first and second absolute position tracks 30a 30b extend next to each other along the travel direction of the reader 50 so as to provide the first and the second absolute positions. This absolute position encoder 10 is devoid of any incremental track as it is designed for less accurate applications.

The absolute position encoder 10 of Figure 14 is thus able to provide the position 39 of the reader 50 (Figure 6a-6d) even in an unfavourable positioning of the reader as it has always at disposal at least one robust absolute position provided by the first and/or the second absolute position tacks 30a, 30b.

In another embodiment schematically shown in Figure 15, the absolution position encoder comprises a digital scale 20 having a single marking made of discrete regions 32 and separating regions 33 therebetween. The reader comprises a first series of detectors 70a-77a and a second series of detectors 70b-77b. The first and second series of the detectors extend along the travel direction of the reader and next to each other. The position of each detector of the first series of detectors 70a-77a is offset with respect to the corresponding detector of the second series of detectors 70a-77a along the travel direction of the reader. The offset may for example correspond to half the sensing area along the travel direction. The position encoder is configured to select the first or second absolute position code which is read by the series of detectors among which no detector is aligned with a transition between a discrete region 32 and a separating region 33 of the digital scale 20.

In another embodiment schematically shown in Figure 16, the absolution position encoder comprises a digital scale 20 having a single marking made of discrete regions 32 and transition regions 33 therebetween. The reader comprises a first series of detectors 70a-77a and a second series of detectors 70b-77b. The detectors of the first series of detectors 70a-77a are interleaved with the detectors of the second series of detectors 70b-77b to form pair of adjacent detectors 70a-70b, 71a-71b, 72a-72b, 73a-73b, 74a-74b, 75a-75b, 76a-76b, 77a-77b. The position encoder is configured to select the first or second absolute position code which is read by the series of detectors among which no detector is aligned with a transition between a discrete region 32 and a separating region 33 of the digital scale 20.

Advantageously, the absolute position encoder 10 can be configured to estimate or determine a reliability and/or an unreliability of the first absolute position, and/or of the second absolute position respectively, in order to assure a more reliable position of the reader. The reliability and/or unreliability estimation or determination can be based on (e.g. a verification of): a given spatial relationship between the first and the second absolute position. In fact, if the first and the second absolute position are related to adjacent absolute positions, the first absolute position (and even the second absolute position) can be estimated as reliable. The absolute position encoder 10 can thus estimate/determine that the reader is probably positioned in an intermediate zone between the centres of the two divisions). The reader position 39 can thus relies on the first absolute position. Alternatively or complementarily, the reader position 39 can relies on the second absolute position.

Alternatively or complementarily, the absolute position encoder 10 can be configured to estimate or determine a reliability and/or an unreliability based on (e.g. a verification of) a given digital pattern of a digital representation, or relationship between digital representations related to first and/or the second absolute position, e.g. the first and the second unique digital identifier.

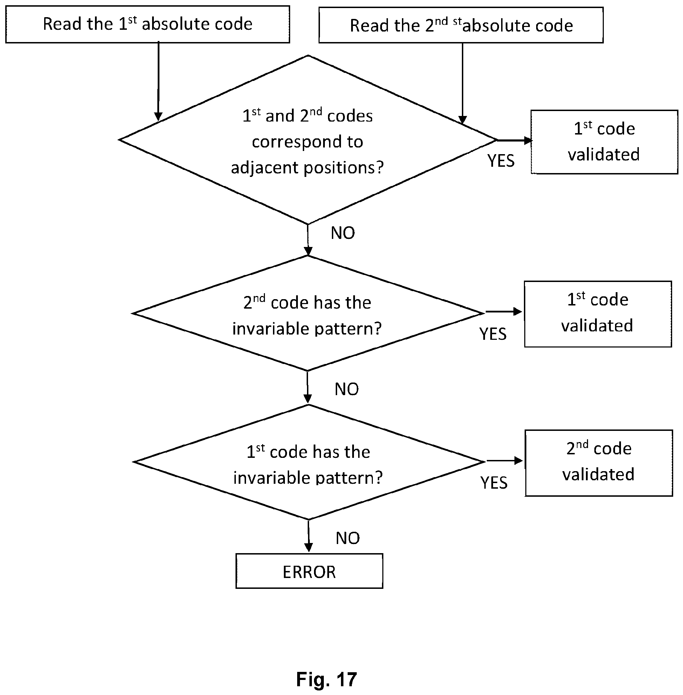

As illustrated in Figure 17, in case of a failure of the above-described estimation/determination, the absolute position encoder 10 can be configured to estimate or determine if the reader is an unfavourable position with respect to the second absolute position, i.e. the (sensed) second absolute position is incorrect (as one or more detectors thereof is/are aligned with transitions). This situation is similar to these represented by Figure 6a. This spatial situation can be verified by checking if the digital representation on which the second position relies presents a given pattern. The pattern can correspond to the common digits (or invariable pattern, i.e. non-transient digits) of the two adjacent unique digital identifiers that are spatially related to the first absolute position (i.e. whose overlapping scale divisions overlap the main scale division indicated by/linked by the first absolute position). Common digits correspond thus to bits of the second absolute position code derivable from the detectors of the second series of detectors 70b-77b that are not facing a transition. Using the exemplary situation illustrated by Figure 6a, considering the first absolute position 37a, the encoder can verify the reliability of this first absolute position 37a by verifying if the digital representation (B), on which the second position relies, comprises the common digits of the division 34' and 35' (i.e. B_{X61}).

In case this digital representation comprises the pattern, the absolute position encoder can thus estimate/determine that the reader is probably positioned in a central zone of the scale division of the first absolute position track that correspond to a transition zone (i.e. unfavourable positioning) of the overlapping scale division. The reader position 39 can thus relies on the first absolute position as considered reliable, at the contrary of the second absolute position.

Complementarily or alternatively, notably in case of a failure of the above-described estimation/determination, the absolute position encoder can be configured to estimate or determine if the reader is an unfavourable position with respect to the first absolute position, i.e. the (sensed) first absolute position is incorrect (as one or more detectors thereof is/are aligned with transitions).

This situation is similar to those represented by the Figure 6c. Similarly to the above-described proceeding, this spatial situation can be verified by verifying if the digital representation on which the first position relies (e.g. identifier of the first plurality of identifiers) presents a given pattern. The pattern can correspond to the common digits (i,e, non-transient digits) of the two adjacent unique digital identifiers that are spatially related to the second absolute position (i.e. whose scale divisions overlap the overlapping scale division indicated by/linked by the second absolute position). In this case, the common digits corresponds to bits of the first absolute position code derivable from the detectors of the first series of detectors 70a-77a that are not facing a transition Using the exemplary situation illustrated by Figure 6c, considering the first absolute position 37a, the encoder can verify the reliability of this second absolute position by verifying if the digital representation (A) on which the first position relies comprises the common digits of the scale divisions 34 and 35 (i.e. A_{X51}) of the first absolute position track.

In case this digital representation comprises the pattern, the absolute position encoder can thus estimate/determine that the reader is probably positioned in the junction between a discrete region and a transition region (i.e. unfavourable positioning) related to the first absolute position. The reader position 39 can thus relies on the second absolute position as considered reliable, at the contrary of the first absolute position.

Alternatively, the absolute position encoder can estimate/ determine a reliability of the first and/or of the second absolute position by verifying a given digital property of the digital representations thereof (e.g. the unique digital identifiers thereof). The digital property can be: a digital signature, a redundance code, a cyclic or block redundancy check (e.g. CRC).

The absolute position encoder can thus provide the position 39 (Figures 6a-6d) relying on:
the first absolute position if the related digital property thereof has been validated; and/or
the second absolute position if the related digital property thereof has been validated.

Figure 18 shows an exemplary usage of the absolute position encoder for dimensional metrology, notably for a sliding calliper.

The sliding calliper 100 comprises one of the above-described absolute position encoders, preferably an absolute position encoder relying on period position as illustrated in the exemplary embodiment of Figures 1 to 6. The sliding calliper 100 comprises a first jaw 102 fixed to a calliper casing 103 and a second jaw 104 connected to a digital scale 120 and slidable relative to the first jaw 102. The sliding calliper 100 further comprises a display 106 for displaying the distance between the first and second jaws 102, 104 provided by the absolute position encoder, preferably by means of the electronic circuit 140.

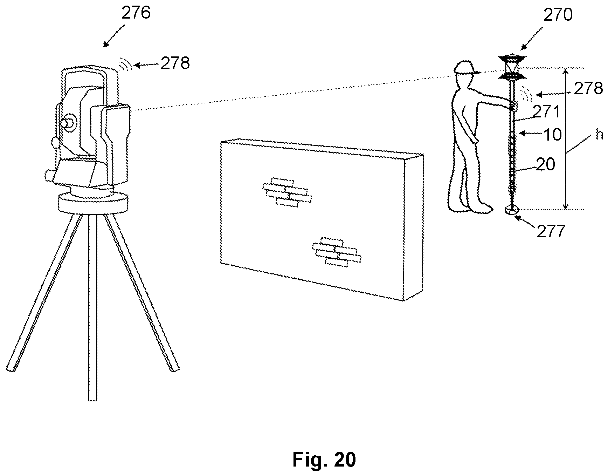

Figures 19 and 20 show of the numerous possible usages or applications of the invention an exemplary usage for geodetic measuring or surveying. As known in the art of geodetic surveying, target points are surveyed by placing specifically embodied transportable target objects, for example surveying poles 270, 270', 270", at the geodetic target point 277. In order to measure and/or stake-out terrain points, generic surveying pole systems can be used as equipment cooperating with Terrestrial Position Systems (TPS) 176 such as a total station or as a cooperative or stand-alone Global Navigation Satellite Systems (GNSS) device. The term surveying pole system refers at least to a surveying pole and a surveying pole with an outsourced (but connected) processing unit.

That is, said target objects comprise for instance a plumb pole 270 with a retroreflector 274 for defining the measurement section or the measurement point. Another pole 270' depicted has a target plate 274' for instance measurable using a camera of a surveying instrument. Alternatively, a pole 270" may have a GNSS antenna 274". Combinations thereof are known, too.

The position measurement of a measurement or stake-out target point 277 is an indirect one: with a TPS 276 as shown in figure 20, a reference point on the surveying pole 270 is measured for example by using a reflector and measuring distance and direction from the TPS 276 to the reflector. Such a reference point is for example the central point of the retroreflector 274, or in case of a GNSS-pole, a GPS-antenna mounted on the pole 170". Since a tip 275, 275', 275" of the surveying pole 270, 270', 270" is placed on the actual target point 77 in the terrain, the position of this target point 277 can be derived due to a determinable spatial relationship between the reference point and the tip 275, 275', 275" of the pole 270. This approach particularly allows to measure or stake-out a point 277 that could not be measured or staked-out directly due to an obstacle such as the wall shown in Figure 20 between the TPS 276 or GNSS and the point 277.

Such an indirect measurement may require a free line of sight between the primary sensor, e.g. a laser based optical distance meter of TPS 276, and reflector/antenna. Additionally, the spatial relationship between a measured center of the reflector or target plate or antenna 274, 274', 274" and the pole tip 275, 275', 275" needs to be known.

To provide further flexibility for such obstacle workarounds, surveying poles 270, 270', 270" as shown provide a length adjustability for the pole 270, 270', 270", which enables a continuously variable pole length or several distinct pole length (the latter for example by multiple lock positions). For this purpose, a telescopic structure of the pole 270, 270', 270" with at least two elements 272, 272', 272" and 273, 273', 273" moveable relative to each other provides not only the length adjustability, but also involves an encoder 10 according to the invention for absolute length measurement and determination of the actual pole length and optionally for conversion between measurement units or standards, too.

As is shown in figure 19, the length adjustment of the surveying pole can be realised in several ways. For instance, the surveying pole 270, 270', 270" has two telescopic sections, whereby as is shown on the exemplary pole 270 with the reflector 274, the upper telescopic pole section 272 of the surveying rod 271 can be screwed as indicated by the swung arrow onto the lower rod section 273 (or vice-versa). Alternatively, and as is shown on the pole 270" with the GNSS antenna 274", the upper tube (section) 272" may be thinner in order to be slidable into the lower tube 273" or the other way round as shown with pole 272' where the lower part 273' is slidable into the upper rod part 272'.

A pole 270, 270', 270" with continuously variable pole height h has a built-in measuring unit which allows to determine the pole height h at in each position of the two telescopic sections. Namely, the length-adjustable surveying pole 270, 270', 270" provides its current length, that is the distance between the length reference point (e.g. center of reflective prism 274 or target plate 274') and the pointing tip 275, 275', 275" using the absolute position encoder 10 according to the invention. Thereby, the scale 20 is read by reader 50 as in principle described above, allowing to determine the actual rod length and actual pole height h at any position. The surveying pole 270, 270', 270" may integrate more than one encoder 10, e.g. if there are more than two telescopic sections present.

In the poles 270, 270' with the retroreflector 274 or the target plate 274', the absolute scale 20 is extending at least over a part of the lower part 273, 273' of rod 271. The scale 20 extends at least along the complete possible length variation and is read by reader 50 situated in the upper part 272, 272'. In exemplary GNSS pole 270", the configuration is different in that the scale 20 of encoder 10 is on the inner surface of the hollow lower part 273" (wherefore it is not shown in figure 19). Of course, it is possible, too, to place the reader 50 in or at the lower part 273, 273', 273" and the scale 20 in or on the upper part 272, 272', 272".

The extension of the scale 20 in another direction (scale width, e.g. perpendicular to the length variation/measuring path) can for example be chosen dependent on the possible degree of freedom of movement in that direction. If for example the upper part 272, 272', 272" and the lower part 273, 273', 273" are fully rotatable to each other (360° rotation possible), the scale 20 can be a complete ring structure, encoding the rod length and thus being readable in any position on the whole 360°circumference. Additionally or alternatively, the reader 50 is designed in such a way, e.g. being ring-like, that the scale 20 can be read in any rotational position of the two segments 272, 272', 272‴ and 273, 273', 273" to each other.

In some embodiments, the scale 20 is embedded in the pole rod 271. That is, the scale 20 can be integrated or incorporated into the structure of one of segments 272, 272', 272‴ and 273, 273', 273", e.g. mechanically or already during the build-up process of the rod 271.

As a further option, some or all parts are embodied as separate modules. For example, the complete encoder 10 can be supplied as an add-on module to upgrade conventional poles. Therefore, the scale 20 may e.g. be stuck onto a segment 272, 272', 272" or 273, 273', 273" and the reader 50 clamped or fastened onto the other segment 273, 273', 273" or 20, 272', 172", thereby the encoder 10 providing preferably a self-calibration functionality. As another example, preferably if the scale 20 is part of the lower part 273, 273', 273", in some embodiments, the lower part 273, 273', 273" may be exchangeable such that pole 270, 270', 270" may be equipped with different lower parts 273, 273', 273" comprising different scales. Similarly, the reader 50 or the whole encoder 10 may be exchangeable, e.g. by the user respectively in the field. As other options, units such as a communication device, power unit or tilt sensors are embodied as (add-on) modules, which may be exchangeable.

The encoder 10 allows for continuously determining the pole height h. In some embodiments, the rod 271, 271', 271" is designed in such a way that several fixed lock positions are provided for secure fixation of distinct pole lengths. In this case, the encoder 10 can be used to control or verify these lock positions. For example, based on the encoder measurement it is checked if a lock position is indeed installed and a warning can be given out to a user if not, e.g. if the installed pole length is only close to a lock position but actually not a lock position. This principle can be used, too, to verify if a lock position itself is position true i.e. if the actual lock position corresponds to its nominal position. For instance due to environmental or aging effects, which is particularly critical in case of telescopic structures, the lock position may change which however can be noticed using the encoder 10. Above that, the encoder measurements can be used to calibrate such distinct lock positions wherefore e.g. rod aging effects can be compensated. Spoken generally, measurement errors caused by the false assumption of using a pole length according to a lock position (when in fact the pole length is not) can advantageously be prevented.

As indicated in figure 20, the actual pole height h measured using the integrated absolute position encoder 10 can advantageously be automatically transmitted to the measuring unit 276. For instance, as depicted, a wireless communication 278 such as a wireless or mobile network between pole 270 and TPS 276 is used to transfer the actual height value instantaneously and/or simultaneously to the measurement of the reference point to the instrument 276. Thereby, the value may be signed with a unique identifier in order to securely and unambiguously link it with the according GNSS or distance measurement. As another option, the measured height h or any other measurement or processing data can be transmitted to other external instruments or control devices such as a field controller or smartphone or to a communication network. Additionally or alternatively, as shown in figure 19 on the right for exemplary pole 270", a pole may comprise a display 279 and operational data or measurement data such as the pole height h is shown on the display to a user.

Further, the according communication device (not shown) may be configured for receiving a request/demand which triggers (a) the communication device to transmit a signal, and/or (b) the reader 50 to read a code. As another option, a trigger is automatically executed if a significant change of position is detected. In addition or as an alternative, an operation or action may be triggered by the operator of the pole 270, 270', 270", for example by pushing a button provided at rod 273, 273', 273". Such an action is for instance the command "store point" or "start target search" which is transmitted to the TPS 276 by the communication device such that the TPS 276 is remote controlled that way.

The signal transmitted to the surveying instrument 276 or any other external controlling device may optionally further be based on the according type of equipment arranged at the reference point. For example, the signal may further comprise information on the target type being a prism, certain parameters of the target such as presence of an additionally attached pole length extension, and/or certain assignable parameters of specific targets.

For optionally further considering a tilt and/or an orientation of the surveying pole 270, 270', 270", a tilt sensor and/or an orientation sensor (not shown) may be comprised by the surveying pole 270, 270', 270". The signal transmitted to the total station 276 may further be based on the determined tilt and/or orientation. Either of the optional tilt and orientation sensor may exemplarily comprise at least one of an acceleration sensor, a gyroscope, and a geomagnetic sensor. The extra information on the six degree of freedom state of the pole is for example useful in situations where the pole is tipped against a ceiling or a side wall. Accordingly, the signal transmitted from the pole 270, 270', 270"may not only comprise information on the length or height h, but also on upside/down orientation relative to the gravity field, tilt information, delta position and delta orientation information during movement of the pole, and/or absolute positions of the pole 270, 270', 270".

The pole 270, 270', 270" may have a power unit for supplying the reader 50 and other units such as above-mentioned optional communication device with power. In the particular case the surveying pole 270, 270', 270" also having a processing unit, this might as well be supplied by the power unit. The power unit may comprise at least one of a rechargeable or nonrechargeable battery and optionally a power cable for obtaining electric power from an external source.

In case of a rechargeable battery, the pole 270, 270', 270" may comprise or means for wireless or inductive charging. Such means can for instance comprise magnetic coils or an NFC unit. Alternatively or additionally, the pole 270, 270', 270" is at least partly self-powering in that the power unit comprises a power generator, for example the latter being configured for "harvesting" electrical energy from a movement of the pole 270, 270', 270" (e.g. when being transported or moved in the field) or said length adjustment. Such harvest could convert the motive power of a length adjustment based on induction.

### List of reference

- 2: Measuring path
- 10: Encoder
- 20: Scale
- 30; 30a, 30b: Absolute position track
- 32; 32a, 32b: Discrete regions
- 33; 33a, 33b: Separating regions
- 37a, 37b, 37c: Edge of markings/transition
- 38: Relative/periodic position
- 39: Absolute position
- 40: Incremental track/ periodic coded track
- 42, 44, 46: Marking
- 50: Reader
- 60a,60b: Absolute sensing unit
- 70a-77a, 70b-77b: Detectors
- 80: Incremental sensing unit
- 90-97: Detectors
- 100: Sliding caliper
- 102: Jaw
- 104: Jaw
- 270, 270', 270": Surveying pole
- 271, 271', 271": Surveying rod
- 272, 272', 272": Upper rod section
- 273, 273', 273": Lower rod section
- 274, 274', 274": Retroreflector, target plate, GNSS antenna
- 275, 275', 275": Pole tip
- 276: Terrestrial position systems TPS
- 277: Geodetic target point
- 278: Wireless communication
- 279: Display
- h: Surveying pole height
- P: Pitch
- A_{N}: Unique identifier / unique digital code
- B_{N}: Unique identifier / unique digital code
- A_{XN}: Transient unique identifier / unique digital code
- B_{XN}: Transient unique identifier / unique digital code
- T: Spatial extension

## Claims

1. Absolute position encoder (10) for a measuring instrument or accessory for measuring instrument, comprising a digital scale (20) and a reader (50) movable relative to the digital scale, the digital scale (20) being arranged along a travel direction (2) of the reader (50), said digital scale comprising at least one absolute position track (30; 30a, 30b) having a sequence of discrete regions (32; 32a, 32b) sharply separated from each other by separating regions (33; 33a, 33b), and wherein the reader (50) comprises a first and a second series of detectors (70a-77a, 70b-77b) configured to sense said discrete regions (32; 32a, 32b) and separating regions (33; 33a, 33b) to detect at least one of a first and a second absolute position code, **characterized in that** said sequence of discrete regions (32; 32a, 32b) and the first and second series of detectors (70a-77a, 70b-77b) are disposed in such a way that none of the detectors of at least one of said first and second series of detectors is aligned with a transition between a discrete region (32; 32a, 32b) and a separating region (33; 33a, 33b) at each possible position of the reader (50) relative to the digital scale (20), **and in that** the position encoder (10) is configured to select the first or second absolute position code which is read by the series of detectors among which no detector is aligned with said transition.

2. The absolute position encoder (10) of claim 1, wherein the selection of the first or second absolute code includes testing whether said first and second absolute position codes read by respective first and second series of detectors (70a-77a, 70b-77b) are coherent with a common assumed position of the reader (50).

3. The absolute position encoder (10) of claim 1 or 2, wherein the digital scale (20) further comprises an additional track (40) adjacent and extending along said at least one absolute position track (30; 30a, 30b), the absolute position encoder (10) being configured to select the absolute position code based on a code derived from the additional track (40).

4. The absolute position encoder of the preceding claim, wherein the additional track (40) is a periodic coded track providing an incremental position code, the absolute position encoder (10) being configured
to select said first or second absolute position code based on said incremental position code, notably based on an interpolated phase of the incremental position code, and
to provide a precise absolute position code comprising a most significant part derived from the selected first or second absolute position code and a least significant part derived from said incremental position code, notably from the interpolated phase.

5. The absolute position encoder (10) of any one of the preceding claims, wherein the digital scale (20) comprises a first absolute position track (30a) having a first sequence of discrete regions (32a) and separating regions (33a) therebetween, and a second absolute position track (30b) having a second sequence of discrete regions (32b) and separating regions (33a) therebetween, said second sequence being a replica of said first sequence shifted along the travel direction of the reader (50) such that the discrete regions (32a) of the first absolute position track (30a) are offset with respect to the corresponding discrete regions (32b) of the second absolute position track (30b) by a constant pitch (P), wherein each detector of the first series of detectors (70a-77a) is transversally aligned, with respect to said travel direction, with a corresponding detector of the second series of detectors (70b-77b), and wherein the first series of detectors is arranged to move along the first absolute position track (30a) while the second series of detectors (10) is arranged to move along the second absolute position track (30b).

6. The absolute position encoder (10) of any one of claims 1 to 4, wherein the digital scale (20) comprises a unique absolute position track (30) comprising discrete regions (32) and separating regions (33) therebetween, wherein said first and second series of detectors (70a-77a, 70b-77b) are disposed along respectively a first and a second row extending along the direction of travel of the reader (50) to detect at least one of said first and second absolute position codes, wherein
each detector (70a-77a) of said first series is offset with respect to a corresponding detector (70b-77b) of said second series by a constant pitch (P) along said direction of travel, or
the detectors (70a-77a) of said first series are interleaved with the detectors (70b-77b) of said second series to form pair of adjacent detectors of respective said first and second series of detectors.

7. The absolute position encoder (10) of any one of the preceding claims, configured as a linear position encoder or as an angle position encoder.

8. The absolute position encoder (10) of any one of the preceding claims, wherein the discrete regions (32; 32a, 32b) of said at least one absolute position track (30, 30a, 30b) differ from said separating regions (33; 33a, 33b) by one of the following properties: optical opacity, optical reflectivity, electric conductivity, magnetization, and magnetic permeability.

9. A measuring instrument or accessory for measuring instrument comprising the absolute position encoder (10) of any one of the preceding claims.

10. The measurement instrument of the preceding claim, configured as a sliding calliper (100) comprising a first jaw (102) fixed relative to the digital scale (20) and a second jaw (104) slidable relative to the first jaw and fixed relative to the reader (20), whereby the absolute position encoder (10) provides a value indicative of a distance between the first and second jaws (102, 104).

11. A survey pole (200) comprising the absolute position encoder of any one of claims 1-8, a first section fixed relative to the digital scale and a second section slidable relative to the first section and fixed relative to the reader, whereby the absolute position encoder provides a value indicative of a height of the survey pole.

12. A method of determining a position of a reader (50) relative to a digital scale (20) along a travel direction, wherein the digital scale (20) comprises at least one absolute position track (30; 30a, 30b) comprising a pattern made of discrete regions (32; 32a, 32b) and separating regions (33; 33a, 33b) therebetween detectable by a plurality of detectors (70a-77a, 70b-77b) in the reader (50), wherein the detectors are disposed along a first and second rows aligned with the travel direction of the reader (50), the method comprising determining a first absolute position code from detectors in a first row and a second absolute position code from detectors in the second row, **characterized in that** said discrete regions (32; 32a, 32b) and the plurality of detectors (70a-77a, 70b-77b) are disposed in such a way that at least one of the first row and second row has no detector aligned with a transition between a discrete region (32; 32a, 32b) and a separating region (33; 33a, 33b) at each possible position of the reader (50) relative to the digital scale (20), **and** the method comprising selecting the absolute position code provided by the row with no detector aligned with said transition.

13. The method of the preceding claim, wherein the selection of the absolute position code includes a test whether the first and second absolute codes are coherent with a common assumed position of the reader (50).

14. The method of the preceding claim, the test comprising: i) taking as assumed position a position given by the first absolute position code, ii) using the assumed position to establish which detectors of the second row are not facing a transition of the digital scale, iii) determining the expected values of bits of the second absolute position code given the assumed position, and iv) comparing the expected values with values of corresponding bits of the second absolute position code derivable from the detectors not facing said transition.

15. The method of claim 12, comprising: i) determining an incremental position code from a periodic coded track on the digital scale, ii) interpolating a phase value of the incremental position code, iii) using the interpolated phase to select the absolute position code, iv) providing a precise absolute position code comprising a most significant part derived from the selected absolute position code and a least significant part derived from the interpolated phase.

## Patentansprüche

1. Absolutpositionsgeber (10) für ein Messinstrument oder Zubehör für ein Messinstrument, mit einer digitalen Skala (20) und einem Lesegerät (50), welches in Bezug auf die digitale Skala bewegbar ist, wobei die digitale Skala (20) entlang einer Bewegungsrichtung (2) des Lesegeräts (50) angeordnet ist, wobei die besagte digitale Skala mindestens eine absolute Positionsspur (30; 30a, 30b) umfasst, welche eine Folge diskreter Bereiche (32; 32a, 32b) aufweist, die durch Trennbereiche (33; 33a, 33b) scharf voneinander getrennt sind, und worin das Lesegerät (50) eine erste und eine zweite Reihe von Detektoren (70a-77a, 70b-77b) umfasst, welche derart konfiguriert sind, dass sie die besagten diskreten Bereiche (32; 32a, 32b) und Trennbereiche (33; 33a, 33b) zu erfassen vermögen, um mindestens einen ersten und einen zweiten absoluten Positionscode zu erfassen, **dadurch gekennzeichnet, dass** die besagte Folge diskreter Bereiche (32; 32a, 32b) und die erste und zweite Reihe von Detektoren (70a-77a, 70b-77b) derart angeordnet sind, dass keiner der Detektoren von mindestens einer der besagten ersten und zweiten Detektorreihen auf einen Übergang zwischen einem diskreten Bereich (32; 32a, 32b) und einem Trennbereich (33; 33a, 33b) an jeder möglichen Position des Lesegeräts (50) in Bezug auf die digitale Skala (20) ausgerichtet ist, und dass der Positionsgeber (10) dazu konfiguriert ist, den ersten oder zweiten absoluten Positionscode auszuwählen, der von der Detektorreihe gelesen wird, unter der kein Detektor auf den besagten Übergang ausgerichtet ist.

2. Absolutpositionsgeber (10) gemäss Anspruch 1, worin die Auswahl des ersten oder zweiten absoluten Codes das Prüfen umfasst, ob der besagte erste und zweite absolute Positionscode, die von der jeweiligen ersten und zweiten Reihe von Detektoren (70a-77a, 70b-77b) gelesen werden, mit einer gemeinsamen angenommenen Position des Lesegeräts (50) übereinstimmen.

3. Absolutpositionsgeber (10) gemäss Anspruch 1 oder 2, worin die digitale Skala (20) zudem eine zusätzliche Spur (40) umfasst, die neben der mindestens einen besagten Absolutpositionsspur (30; 30a, 30b) liegt und sich entlang dieser erstreckt, wobei der Absolutpositionsgeber (10) dazu konfiguriert ist, den absoluten Positionscode auf Grundlage eines von der zusätzlichen Spur (40) abgeleiteten Codes auszuwählen.

4. Absolutpositionsgeber gemäss dem vorhergehenden Anspruch, worin die zusätzliche Spur (40) eine periodisch codierte Spur ist, welche einen inkrementellen Positionscode bereitstellt, wobei der absolute Positionsgeber (10) dazu konfiguriert ist,
den ersten oder zweiten absoluten Positionscode auf der Grundlage des besagten inkrementellen Positionscodes auszuwählen, insbesondere auf Grundlage einer interpolierten Phase des inkrementellen Positionscodes, und
einen präzisen absoluten Positionscode bereitzustellen, der einen höchstwertigen Teil umfasst, der vom ausgewählten ersten oder zweiten absoluten Positionscode abgeleitet ist, und einen niedrigstwertigen Teil, der vom besagten inkrementellen Positionscode abgeleitet ist, insbesondere aus der interpolierten Phase.

5. Absolutpositionsgeber (10) gemäss irgendeinem der vorhergehenden Ansprüche, worin die digitale Skala (20) eine erste Absolutpositionsspur (30a) umfasst mit einer ersten Sequenz diskreter Bereiche (32a) und dazwischen liegender Trennbereiche (33a) und eine zweite Absolutpositionsspur (30b) mit einer zweiten Sequenz diskreter Bereiche (32b) und dazwischen liegender Trennbereiche (33a), wobei die zweite Sequenz eine Replika der besagten ersten Sequenz ist, welche entlang der Bewegungsrichtung des Lesegeräts (50) verschoben ist, so dass die diskreten Bereiche (32a) der ersten Absolutpositionsspur (30a) in Bezug auf die entsprechenden diskreten Bereiche (32b) der zweiten Absolutpositionsspur (30b) um einen konstanten Abstand (P) versetzt sind, worin jeder Detektor der ersten Reihe von Detektoren (70a-77a) in Bezug auf die besagte Bewegungsrichtung quer mit einem entsprechenden Detektor der zweiten Reihe von Detektoren (70b-77b) ausgerichtet ist, und worin die erste Detektorreihe so angeordnet ist, dass sie sich entlang der ersten absoluten Positionsspur (30a) bewegt, während die zweite Reihe von Detektoren (10) derart angeordnet ist, dass sie sich entlang der zweiten Absolutpositionsspur (30b) bewegt.

6. Absolutpositionsgeber (10) gemäss irgendeinem der Ansprüche 1 bis 4, worin die digitale Skala (20) eine einzigartige Absolutpositionsspur (30) umfasst, welche diskrete Bereiche (32) und dazwischen liegende Trennbereiche (33) umfasst, worin die erste und zweite Reihe von Detektoren (70a-77a, 70b-77b) entlang einer ersten bzw. zweiten Reihe angeordnet sind, die sich entlang der Bewegungsrichtung des Lesegeräts (50) erstrecken, um mindestens einen der ersten und zweiten besagten absoluten Positionscodes zu erfassen, worin
jeder Detektor (70a-77a) der ersten Reihe in Bezug auf einen entsprechenden Detektor (70b-77b) der zweiten Reihe um einen konstanten Abstand (P) entlang der besagten Bewegungsrichtung versetzt ist, oder
die Detektoren (70a-77a) der ersten Reihe mit den Detektoren (70b-77b) der zweiten Reihe verschränkt sind, um ein Paar benachbarter Detektoren der jeweiligen ersten und zweiten Reihe von Detektoren zu bilden.

7. Absolutpositionsgeber (10) gemäss irgendeinem der vorhergehenden Ansprüche, welcher als Linearpositionsgeber oder als Winkelpositionsgeber konfiguriert ist.

8. Absolutpositionsgeber (10) gemäss irgendeinem der vorhergehenden Ansprüche, worin sich die diskreten Bereiche (32; 32a, 32b) der besagten mindestens einen absoluten Positionsspur (30, 30a, 30b) von den Trennbereichen (33; 33a, 33b) durch eine der folgenden Eigenschaften unterscheidet: optische Opazität, optisches Reflexionsvermögen, elektrische Leitfähigkeit, Magnetisierung und magnetische Permeabilität.

9. Messinstrument oder Zubehör für ein Messinstrument, welches den Absolutpositionsgeber (10) gemäss irgendeinem der vorhergehenden Ansprüche umfasst.

10. Messinstrument gemäss dem vorhergehenden Anspruch, als Schieblehre (100) ausgebildet und umfassend eine erste Backe (102), welche in Bezug auf die digitale Skala (20) fest ist, und eine zweite Backe (104), welche in Bezug auf die erste Backe verschiebbar und in Bezug auf das Lesegerät (20) fest ist, wobei der Absolutpositionsgeber (10) einen Wert liefert, der einen Abstand zwischen der ersten und der zweiten Backe (102, 104) angibt.

11. Vermessungsstab (200), mit einem Absolutpositionsgeber gemäss irgendeinem der Ansprüche 1 bis 8, einem ersten Abschnitt, welcher in Bezug auf die digitale Skala fest ist, und einem zweiten Abschnitt, welcher in Bezug auf den ersten Abschnitt verschiebbar und in Bezug auf das Lesegerät fest ist, wobei der Absolutpositionsgeber einen Wert liefert, der eine Höhe des Vermessungsstabs angibt.

12. Verfahren zum Bestimmen einer Position eines Lesegeräts (50) in Bezug auf eine digitale Skala (20) entlang einer Bewegungsrichtung, worin die digitale Skala (20) mindestens eine Absolutpositionsspur (30; 30a, 30b) umfasst, welche ein Muster aus diskreten Bereichen (32; 32a, 32b) und dazwischen liegenden Trennbereichen (33; 33a, 33b) umfasst, die durch eine Vielzahl von Detektoren (70a-77a, 70b-77b) im Lesegerät (50) erkennbar sind, worin die Detektoren entlang einer ersten und zweiten Reihe angeordnet sind, die mit der Bewegungsrichtung des Lesegeräts (50) ausgerichtet sind, wobei das Verfahren das Bestimmen eines ersten absoluten Positionscodes aus Detektoren in einer ersten Reihe und eines zweiten absoluten Positionscodes aus Detektoren in der zweiten Reihe umfasst, **dadurch gekennzeichnet, dass** die besagten diskreten Bereiche (32; 32a, 32b) und die Vielzahl von Detektoren (70a-77a, 70b-77b) derart angeordnet sind, dass mindestens eine der ersten Reihe und der zweiten Reihe keinen Detektor aufweist, welcher mit einem Übergang zwischen einem diskreten Bereich (32; 32a, 32b) und einem Trennbereich (33; 33a, 33b) an jeder möglichen Position des Lesers (50) in Bezug auf die digitale Skala (20) ausgerichtet ist, **und** wobei das Verfahren das Auswählen des absoluten Positionscodes umfasst, welcher von der Reihe ohne mit dem Übergang ausgerichteten Detektor bereitgestellt wird.

13. Verfahren gemäss dem vorhergehenden Anspruch, worin die Auswahl des absoluten Positionscodes einen Test umfasst, ob der erste und der zweite absolute Code mit einer gemeinsamen angenommenen Position des Lesegeräts (50) übereinstimmen.

14. Verfahren gemäss dem vorhergehenden Anspruch, wobei der Test umfasst: i) Nehmen einer durch den ersten absoluten Positionscode gegebenen Position als angenommene Position, ii) Verwenden der angenommenen Position, um festzustellen, welche Detektoren der zweiten Reihe nicht einem Übergang der digitalen Skala zugewandt sind, iii) Bestimmen der erwarteten Werte von Bits des zweiten absoluten Positionscodes bei gegebener angenommener Position, und iv) Vergleichen der erwarteten Werte mit Werten von entsprechenden Bits des zweiten absoluten Positionscodes, die von den Detektoren ableitbar sind, die nicht dem Übergang zugewandt sind.

15. Verfahren gemäss Anspruch 12, umfassend: i) Bestimmen eines inkrementellen Positionscodes aus einer periodisch codierten Spur auf der digitalen Skala, ii) Interpolieren eines Phasenwerts des inkrementellen Positionscodes, iii) Verwenden der interpolierten Phase zum Auswählen des absoluten Positionscodes, iv) Bereitstellen eines präzisen absoluten Positionscodes, der einen höchstwertigen Teil umfasst, der vom ausgewählten absoluten Positionscode abgeleitet ist, und eines niedrigstwertigen Teil, der aus der interpolierten Phase abgeleitet ist.

## Revendications

1. Codeur de position absolue (10) pour instrument de mesure ou accessoire pour instrument de mesure, comprenant une échelle numérique (20) et un lecteur (50) mobile par rapport à l'échelle numérique, l'échelle numérique (20) étant disposée selon une direction de déplacement (2) du lecteur (50), ladite échelle numérique comprenant au moins une piste de position absolue (30; 30a, 30b) ayant une séquence de régions discrètes (32; 32a, 32b) nettement séparées les unes des autres par des régions de séparation (33; 33a, 33b), et dans lequel le lecteur (50) comprend une première et une deuxième série de détecteurs (70a-77a, 70b-77b) configurés pour détecter lesdites régions discrètes (32; 32a, 32b) et régions de séparation (33; 33a, 33b) pour détecter au moins un parmi un premier et un deuxième code de position absolu, **caractérisé en ce que** ladite séquence de régions discrètes (32; 32a, 32b) et la première et deuxième série de détecteurs (70a-77a, 70b-77b) sont disposées de telle manière qu'aucun des détecteurs de ladite au moins une premières et deuxièmes séries de détecteurs n'est aligné avec une transition entre une région discrète (32; 32a, 32b) et une région de séparation (33; 33a, 33b) à chaque position possible du lecteur (50) par rapport à l'échelle numérique (20), et **en ce que** le codeur de position (10) est configuré pour sélectionner le premier ou deuxième code de position absolue qui est lu par la série de détecteurs parmi lesquels aucun détecteur n'est aligné avec ladite transition.

2. Codeur de position absolue (10) selon la revendication 1, dans lequel la sélection du premier ou du deuxième code absolu comprend de tester si lesdits premiers et deuxièmes codes de position absolue lus par les premières et deuxièmes séries respectives de détecteurs (70a-77a, 70b-77b) sont cohérents avec une position commune présumée du lecteur (50).

3. Codeur de position absolue (10) selon la revendication 1 ou 2, dans lequel l'échelle numérique (20) comprend en outre une piste supplémentaire (40) adjacente et s'étendant le long de ladite au moins une piste de position absolue (30; 30a, 30b), le codeur de position absolue (10) étant configuré pour sélectionner le code de position absolue sur la base d'un code dérivé de la piste supplémentaire (40).

4. Codeur de position absolue selon la revendication précédente, dans lequel la piste supplémentaire (40) est une piste codée périodique fournissant un code de position incrémental, le codeur de position absolue (10) étant configuré
pour sélectionner ledit premier ou deuxième code de position absolue sur la base dudit code de position incrémental, notamment basé sur une phase interpolée du code de position incrémental, et
pour fournir un code de position absolue précis comprenant une partie la plus significative dérivée du premier ou du deuxième code de position absolue sélectionné et une partie la moins significative dérivée dudit code de position incrémental, notamment de la phase interpolée.

5. Codeur de position absolue (10) selon l'une quelconque des revendications précédentes, dans lequel l'échelle numérique (20) comprend une première piste de position absolue (30a) ayant une première séquence de régions discrètes (32a) et de régions de séparation (33a) entre elles, et une deuxième piste de position absolue (30b) ayant une deuxième séquence de régions discrètes (32b) et de régions de séparation (33a) entre elles, ladite deuxième séquence étant une réplique de ladite première séquence décalée le long de la direction de déplacement du lecteur (50) de telle sorte que les régions discrètes (32a) de la première piste de position absolue (30a) sont décalées par rapport aux régions discrètes correspondantes (32b) de la deuxième piste de position absolue (30b) par un pas constant (P), chaque détecteur de la première série de détecteurs (70a à 77a) étant aligné transversalement, par rapport à ladite direction de déplacement, avec un détecteur correspondant de la deuxième série de détecteurs (70b à 77b), et la première série de détecteurs étant agencée pour se déplacer le long de la première piste de position absolue (30a) tandis que la deuxième série de détecteurs (10) est agencée pour se déplacer le long de la deuxième piste de position absolue (30b).

6. Codeur de position absolue (10) selon l'une quelconque des revendications 1 à 4, dans lequel l'échelle numérique (20) comprend une piste de position absolue unique (30) comprenant des régions discrètes (32) et des régions de séparation (33) entre elles, dans lequel lesdites premières et deuxièmes séries de détecteurs (70a-77a, 70b-77b) sont disposées le long d'une première respectivement d'une deuxième rangée s'étendant selon la direction de déplacement du lecteur (50) pour détecter au moins l'un desdits premiers et deuxièmes codes de position absolue, dans lequel
chaque détecteur (70a-77a) de ladite première série est décalé par rapport à un détecteur correspondant (70b-77b) de ladite deuxième série par un pas constant (P) le long de ladite direction de déplacement, ou
les détecteurs (70a-77a) de ladite première série sont entrelacés avec les détecteurs (70b-77b) de ladite deuxième série pour former une paire de détecteurs adjacents desdites premières respectivement deuxièmes séries de détecteurs.

7. Codeur de position absolue (10) selon l'une quelconque des revendications précédentes, configuré comme codeur de position linéaire ou comme codeur de position angulaire.

8. Codeur de position absolue (10) selon l'une quelconque des revendications précédentes, dans lequel les régions discrètes (32 ; 32a, 32b) de ladite au moins une piste de position absolue (30, 30a, 30b) diffèrent desdites régions de séparation (33; 33a, 33b) par l'une des propriétés suivantes : opacité optique, réflectivité optique, conductivité électrique, aimantation et perméabilité magnétique.

9. Instrument de mesure ou accessoire pour instrument de mesure comprenant le codeur de position absolue (10) selon l'une quelconque des revendications précédentes.

10. Instrument de mesure selon la revendication précédente, configuré comme un pied à coulisse (100) comprenant un premier bec (102) fixe par rapport à l'échelle numérique (20) et un deuxième bec (104) coulissant par rapport au premier bec et fixe par rapport au lecteur (20), grâce à quoi le codeur de position absolue (10) fournit une valeur indicative d'une distance entre les premiers et deuxièmes becs (102, 104).

11. Perche d'arpentage (200) comprenant le codeur de position absolue selon l'une quelconque des revendications 1 à 8, une première section fixe par rapport à l'échelle numérique et une deuxième section pouvant coulisser par rapport à la première section et fixe par rapport au lecteur, grâce à quoi codeur de position absolue fournit une valeur indicative d'une hauteur de la perche d'arpentage.

12. Procédé pour déterminer une position d'un lecteur (50) par rapport à une échelle numérique (20) le long d'une direction de déplacement, dans lequel l'échelle numérique (20) comprend au moins une piste de position absolue (30; 30a, 30b) comprenant un motif composé de régions discrètes (32; 32a, 32b) et de régions de séparation (33; 33a, 33b) entre elles détectables par une pluralité de détecteurs (70a-77a, 70b-77b) dans le lecteur (50), les détecteurs étant disposés le long d'une première et deuxième rangées alignées avec la direction de déplacement du lecteur (50), le procédé comprenant de déterminer un premier code de position absolue à partir de détecteurs dans une première rangée et un deuxième code de position absolue à partir de détecteurs dans la deuxième rangée, **caractérisé en ce que** lesdites régions discrètes (32; 32a, 32b) et la pluralité de détecteurs (70a-77a, 70b-77b) sont disposés de telle manière qu'au moins l'une parmi la première rangée et la deuxième rangée ne comporte aucun détecteur aligné avec une transition entre une région discrète (32; 32a, 32b) et une région de séparation (33; 33a, 33b) à chaque position possible du lecteur (50) par rapport à l'échelle numérique (20), **et** le procédé comprenant la sélection du code de position absolue fourni par la rangée avec aucun détecteur aligné avec ladite transition.

13. Procédé selon la revendication précédente, dans lequel la sélection du code de position absolue comprend un test pour savoir si les premiers et deuxièmes codes absolus sont cohérents avec une position commune présumée du lecteur (50).

14. Procédé selon la revendication précédente, le test comprenant: i) prendre comme position présumée une position donnée par le premier code de position absolue, ii) utiliser la position présumée pour établir quels détecteurs de la deuxième rangée ne font pas face à une transition de l'échelle numérique , iii) déterminer les valeurs attendues des bits du deuxième code de position absolue étant donné la position présumée, et iv) comparer les valeurs attendues avec les valeurs des bits correspondants du deuxième code de position absolue dérivable des détecteurs ne faisant pas face à ladite transition.

15. Procédé selon la revendication 12, comprenant: i) de déterminer un code de position incrémental à partir d'une piste codée périodique sur l'échelle numérique, ii) interpoler une valeur de phase du code de position incrémental, iii) utiliser la phase interpolée pour sélectionner le code de position absolue, iv) fournir un code de position absolue précis comprenant une partie la plus significative dérivée à partir du code de position absolue sélectionné et une partie la moins significative dérivée à partir de la phase interpolée.
